# EUROPÄISCHE PATENTSCHRIFT

(11) **EP 3 743 388 B1**
(45) Veröffentlichungstag und Bekanntmachung des Hinweises auf die Patenterteilung: **27.03.2024**
(21) Anmeldenummer: 19703253.5
(22) Anmeldetag: 24.01.2019
(51) Int. Cl.: C03B 23/09

(54) **VERFAHREN UND VORRICHTUNG ZUR HEISSFORMGEBUNG VON GLASBEHÄLTNISSEN**
METHOD AND DEVICE FOR THE HOT FORMING OF GLASS CONTAINERS
PROCÉDÉ ET DISPOSITIF POUR LE FORMAGE À CHAUD DE CONTENANTS EN VERRE

(30) Priorität: 26.01.2018 DE 102018101832
(43) Veröffentlichungstag der Anmeldung: 02.12.2020
(73) Patentinhaber: SCHOTT Pharma Schweiz AG, 9000 St. Gallen (CH)
(72) Erfinder: GERBER, Mauro, 9032 Engelburg (CH)
(74) Vertreter: Ullrich & Naumann PartG mbB
(86) Internationale Anmeldenummer: PCT/EP2019/051694
(87) Internationale Veröffentlichungsnummer: WO 2019/145389

(56) Entgegenhaltungen:
- DE-C- 541 304

## Beschreibung

Die vorliegende Anmeldung beansprucht die Priorität der Deutschen Patentanmeldung Nr. 10 2018 101 832.0 "Verfahren und Vorrichtung zur Heißformgebung von Glasbehältnissen", angemeldet am 26. Januar 2018, deren gesamter Offenbarungsinhalt hiermit im Wege der Bezugnahme ausdrücklich mit beinhaltet sei.

### Gebiet der Erfindung

Die vorliegende Erfindung betrifft allgemein die Herstellung von Glasbehältnissen, insbesondere zur Verwendung als Primär-Packmittel für pharmazeutische Wirkstoffe, beispielsweise als Glasfläschchen (Vials), Karpulen oder Spritzenkörper, und betrifft insbesondere ein Verfahren und eine Vorrichtung zur Heißformgebung solcher Glasbehältnisse, die aus einem Glasrohr hergestellt sind, wobei das Verfahren bzw. die Vorrichtung ausgelegt ist, um Abmessungen im Bereich einer Öffnung in einem Endabschnitt solcher Glasbehältnisse mit einer gleichbleibend sehr hohen Präzision vorzugeben, beispielsweise im Bereich einer Öffnung von Glasfläschchen (Vials) oder Karpulen oder im Bereich einer Ausstoßöffnung eines Spritzenkörpers.

### Hintergrund der Erfindung

Eine solche Heißformgebungsvorrichtung ist aus der DE 103 41 300 B3 bekannt und dient, wie auch die Heißformgebungsvorrichtung gemäß der vorliegenden Erfindung, zur Herstellung von Glasbehältnissen aus einem Glasrohr, insbesondere zur Verwendung als Primär-Packmittel für pharmazeutische Wirkstoffe, beispielsweise als Glasfläschchen (Vials), Karpulen oder Spritzenkörper.

Eine solche Heißformgebungsvorrichtung ist üblicherweise vertikal ausgerichtet und als Rundlaufmaschine ausgebildet. Eine Rundlaufmaschine weist üblicherweise zwei Drehtische auf, die jeweils schrittweise um einen zugeordneten Drehturm gedreht werden, um eine Serie von Bearbeitungsstationen bis zur Bearbeitung und Heißformgebung zu durchlaufen. Über den Umfang der Drehtische sind jeweils mehrere rotierende Haltefutter zum Halten von Werkstücken, also von Glasrohrabschnitten verteilt angeordnet. Auf der Arbeitsplatte der Heißformgebungsvorrichtung sind Werkzeuge und eine Mehrzahl von Gasbrennern zur Umformung montiert. Im Arbeitsmodus schwenken die Drehtürme von Arbeitsposition zu Arbeitsposition und sind bei der Übergabe vom Haupt- zum Nebenturm zur Produktübergabe synchronisiert.

Vergleichbare Heißformgebungsvorrichtungen der vorgenannten Art sind in DE 20 2004 004 560 U1 und EP 2 818 454 A1 offenbart.

Aus der WO 2005/092805 A1 ist eine Glasbearbeitungsmaschine der vorgenannten Art offenbart, bei der zur präzisen Ausbildung der Halsöffnung der Glasbehältnisse die bei der Heißumformung verwendeten Formelemente in einer Richtung senkrecht zur Längsachse der Glasbehältnisse bzw. der Drehachse des rasch rotierenden Haltefutters verstellt werden, sodass die Achse des Formwerkzeugs präzise mit der Achse des rasch rotierenden Haltefutters fluchtet. Hierzu ist das jeweilige Formwerkzeug, beispielsweise ein Formdorn, auf einem Kreuzschlitten montiert, der in zwei Richtungen (x, y) senkrecht zu der Achse des rasch rotierenden Haltefutters verstellt werden kann. WO 2005/092805 A1 offenbart zu diesem Zweck eine Steuerung oder Regelung des Kreuzschlittens.

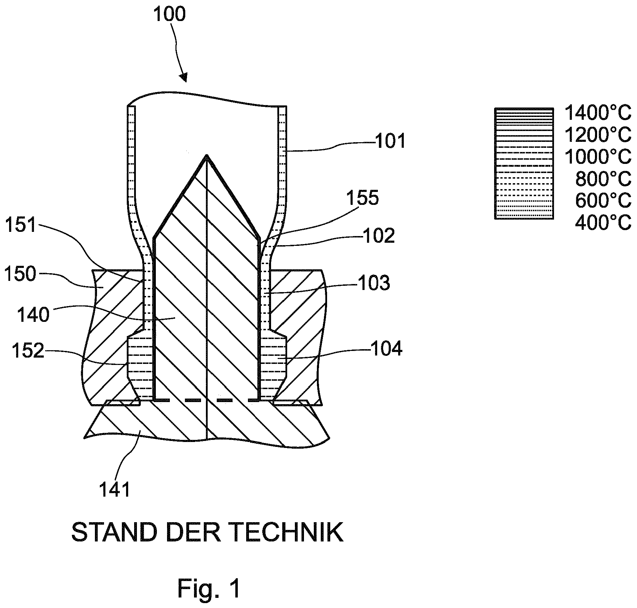

Die Fig. 1 zeigt in einer schematischen Schnittansicht die geometrischen Verhältnisse bei der Heißformgebung des Halses eines Glasfläschchens (Vial). Das Vial 100 ist kopfüber in ein rotierendes Haltefutter (nicht gezeigt) eingespannt und exakt senkrecht (in z-Richtung) ausgerichtet, sodass beim Rotieren keine Taumelbewegungen auftreten. Unterhalb des Halses 103 ist ein Formdorn 140 einer Glasbearbeitungsmaschine auf einer Anschlagplatte 141 montiert, der senkrecht ausgerichtet ist. Wie in der Fig. 1 gezeigt, wird zur Heissumformung der als Öffnungs-Formungswerkzeug wirkende Formdorn 140 in die Halsöffnung des halbfertigen Zwischenprodukts eingeführt, wobei von außen als Formwerkzeuge wirkende Formrollen 150 gegen die Halsöffnung wirken, um die Außenkontur der Halsöffnung festzulegen, und wobei die als weiteres Formwerkzeug wirkende Anschlagplatte 141 gegen das Ende des halbfertigen Zwischenprodukts wirkt, um die Form des Mündungsrands festzulegen. Zwischen den Formrollen 150, dem Formdorn 140 und der Anschlagplatte 141 ist ein Hohlraum ausgebildet, dessen Kontur durch das Außenprofil der Formrollen 150 festgelegt ist. Die Außenkontur und der Mündungsrand des Glasbehältnisses passen sich während der Heissformgebung der Kontur dieses Hohlraums an.

Die vorgenannte Vorgehensweise ist auf diesem Gebiet seit langem bekannt, und beispielsweise bereits in der DE 670 112 A beschrieben.

Allerdings variieren wichtige Abmessungen der als Ausgangsmaterial verwendeten Glasrohre bei genauerer Betrachtung durchaus, was einen Einfluss auf die Genauigkeit der Abmessungen im Bereich der Halsöffnung von Glasbehältnissen hat. Denn Glasrohre werden üblicherweise nach dem bekannten Danner- oder Vello-Verfahren aus Glasschmelzen gezogen, sodass herstellungsbedingt der Innen- und Außendurchmesser aber auch die Wandstärke in Längsrichtung aber auch in Umfangsrichtung der Glasrohre variiert.

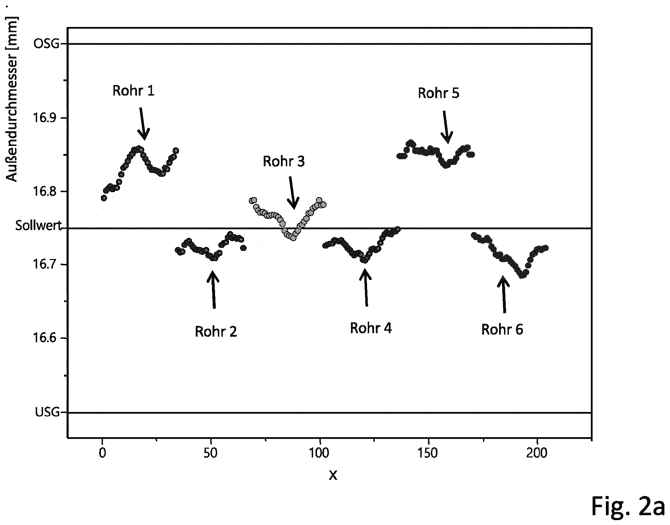

Die Fig. 2a zeigt beispielhaft die Variation des Außendurchmessers von sechs Glasrohren mit einem Sollwert von 16,75 mm, wie diese typischerweise zur Herstellung von Glasbehältnissen, insbesondere von Pharma-Packmitteln, verwendet werden. Der Außendurchmesser variiert nicht nur zwischen den einzelnen Glasrohren, sondern auch in deren Längsrichtung. Entsprechendes gilt insbesondere auch für die Wandstärke von Glasrohren. Solche Variationen treten nicht nur zwischen unterschiedlichen Chargen von Glasrohren auch, sondern auch innerhalb der gleichen Charge.

In der herkömmlichen Arbeitsgeometrie gemäß der Fig. 1 mit starr angeordneten Formwerkzeugen besteht keine Möglichkeit, überschüssiges Glas, das aus solchen Dimensionsabweichungen resultiert, zu kompensieren.

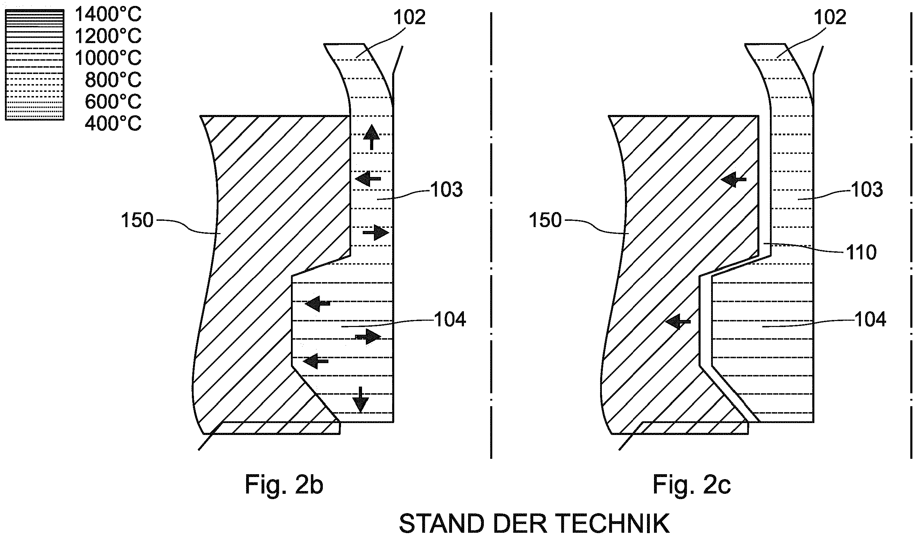

Um solche Dimensionsabweichungen der als Ausgangsmaterial verwendeten Glasrohre zu kompensieren, besteht eine übliche Vorgehensweise darin, die zur Heißumformung eingesetzten Formrollen mittels Rückstellfedern gegen den zugeordneten Formdorn vorzuspannen. Diese Vorgehensweise ist schematisch in den Figuren 2b und 2c dargestellt.

Fig. 2b zeigt einen Zustand, bei dem das Volumen des wärmeweichen Glases für ein erstes Glasrohr im Bereich der Halsöffnung exakt dem Volumen des vorgenannten Hohlraums entspricht, der zwischen den Formrollen 150, der Anschlagplatte und dem Formdorn ausgebildet ist. Gemäß der Fig. 2c ist das entsprechende Volumen des wärmeweichen Glases für ein zweites Glasrohr im Bereich der Halsöffnung kleiner als dieses Volumen, beispielsweise weil die Wandstärke des Glasrohrs in dem umzuformenden Bereich aufgrund von Schwankungen der Wandstärke im Ausgangs-Glasrohr geringer ist. Um diesen Effekt zu kompensieren, ist die Formrolle 150 elastisch gegen den Formdorn vorgespannt, sodass der Spalt 110 zwischen den Formrollen 150 und der Außenkontur des Glasbehältnisses im Bereich der Halsöffnung stets verschwindend ist. Dadurch lassen sich nicht nur Dimensionsabweichungen des Ausgangs-Glasrohrs im Bereich der Halsöffnung kompensieren, sondern auch zu hohe Drücke im Umformungsbereich vermeiden und kosmetische Fehler, wie beispielsweise Druckspuren, Falten, Narben usw., vermeiden.

Während mit der herkömmlichen Arbeitsgeometrie gemäß der Fig. 1 der Innendurchmesser der Halsöffnung durch den Formdorn 140 sehr präzise vorgegeben werden kann, führen derartige Schwankungen der Masse der wärmeweichen Glases im Bereich der Heißumformung zwangsläufig zu Dimensionsschwankungen an der Halsöffnung am fertigen Glasbehältnis nach der Heißumformung. Beispielsweise können wichtige Abmessungen der Glasbehältnisse, wie beispielsweise die Wandstärke im Bereich des Rollrands von Vials, die Wandstärke im Bereich des Halses 103 (vgl. Fig. 1) oder der Schulter 102, Außendurchmesser des Rollrands 104 oder auch die Höhe des Rollrands 104, zum Teil erheblich variieren. Ebenso kann überschüssiges Glas nach oben ausweichen, was zu einer Deformation der Schulter eines Fläschchens führen kann.

Hinzu kommt ein weiterer Effekt, der durch die Betriebsweise derzeit üblicher Heißformgebungsvorrichtungen bedingt ist. Denn Glasbehältnisse der vorgenannten Art werden auf Heißformgebungsvorrichtungen üblicherweise rund um die Uhr hergestellt, wobei die Prozessparameter bei der Heißformgebung von einem Maschinenführer üblicherweise von Hand eingestellt und während des laufenden Betriebs gelegentlich geeignet verstellt werden. Dabei spielt das Gefühl des Maschinenführers für das Betriebsverhalten der jeweiligen Heißformgebungsvorrichtung eine nicht unerhebliche Rolle. Heutzutage werden sämtliche Endprodukte (Glasbehältnisse nach der Heißumformung) mittels Video-Inspektionssystemen vermessen und bewertet. Auch anhand dieser Inspektionsergebnisse kann der Maschinenführer die Prozessparameter bei der Heißformgebung nachstellen, dann aber teils mit erheblicher Zeitverzögerung.

Der Maschinenführer stellt deshalb die Prozessparameter bei der Heißformgebung stets so ein, dass die dimensionalen Schwankungen sämtlicher fertige Endprodukte (Glasbehältnisse nach der Heißumformung) innerhalb akzeptabler Toleranzgrenzen liegen. Die Einstellung der Prozessparameter kann dabei jedoch nicht für jedes Glasrohr erfolgen.

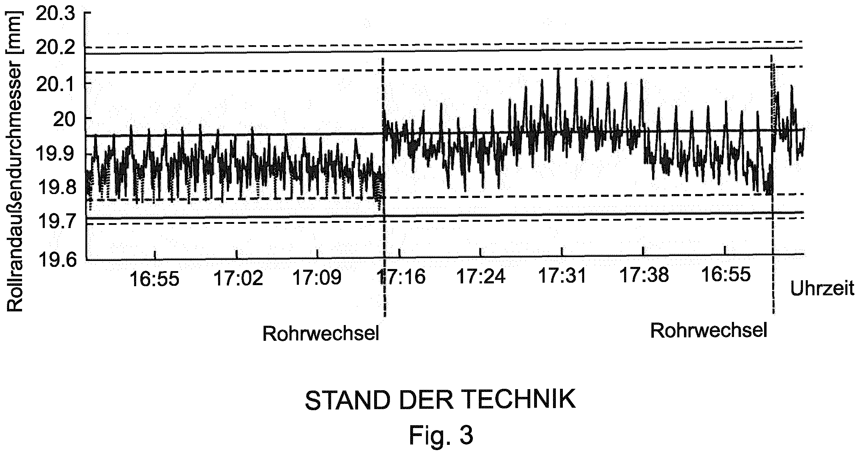

Diese Vorgehensweise ist beispielhaft in der Fig. 3 dargestellt, in der der Rollrandaußendurchmesser von Glasvials gegen die fortlaufende Produktionszeit aufgetragen ist. Für eine erste Charge von Glasrohren (Uhrzeit bis 17:15) liegt der Rollrandaußendurchmesser für praktisch alle Glasvials in einem Band zwischen etwas 19,78 mm und 19,96 mm. Nach einem Wechsel auf eine andere Charge von Glasrohren mit vermutlich größerer Wandstärke streut der Rollrandaußendurchmesser zwar stärker. Stets liegen die Rollrandaußendurchmesser aber zwischen einem unteren Toleranz-Grenzwert und einem oberen Toleranz-Grenzwert, die durch gestrichelte Linien angedeutet sind.

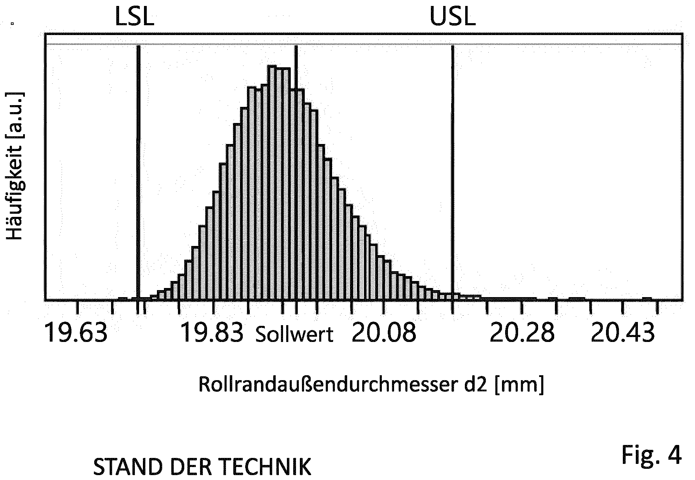

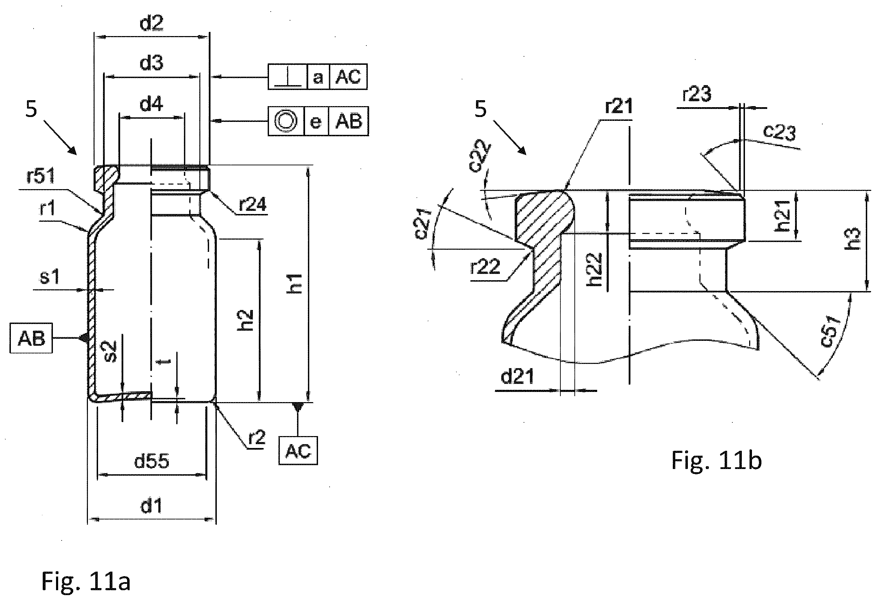

Die Fig. 4 zeigt am Beispiel des Rollrandaußendurchmessers d2 (vgl. Fig. 11a) ein Histogramm für die Verteilung der Dimensionsabweichungen im Bereich der Halsöffnung. Wie man der Fig. 4 entnehmen kann, beträgt die Varianz des Rollrandaußendurchmessers etwa 0,02% vom Soll-Wert bei Zugrundelegung einer Normalverteilung für die Verteilung des Rollrandaußendurchmessers. Für einen Soll-Wert des Rollrandaußendurchmessers von 19,95 mm ist beispielsweise das 95%-Vertrauensintervall von der Größenordnung von etwa 0,249 mm. Entsprechendes gilt auch für andere wichtige Dimensionen im Bereich der Halsöffnung in einer Richtung senkrecht zur Längsrichtung der Glasbehältnisse.

DE 2526569 A1 offenbart ein Verfahren und eine Vorrichtung zur Herstellung eines Rohrs aus Quarzglas mit einem sich verjüngenden, kappenartigen Endbereich. Dabei wird ein Ausgangs-Glasrohr mit nicht-rundem Querschnitt in Rotation versetzt und im Endbereich erwärmt, bis der Endbereich plastisch wird. In den rotierenden Endbereich wird ein zylindrisches und sich verjüngendes Innenformwerkzeug eingebracht. Die Außenkontur des Endbereichs kann zusätzlich durch ein gegenüberliegenden, hohlzylindrisches Außenformwerkzeug definiert werden. Eine motorische Verstellung von Innenformwerkzeug und Außenformwerkzeug ist nicht offenbart. Die Verstellung von Innenformwerkzeug und Außenformwerkzeug erfolgt nicht in Entsprechung zu den Abmessungsdaten für das jeweilige Glasrohr.

Die DE 541 304 C beschreibt ein Verfahren und eine Vorrichtung zum Umformen der Enden abgepasster Glasrohre zu Flaschenhälsen. Dabei werden die Glasrohre mit einer Heizflamme an ihrem Endbereich erhitzt und an einer Bearbeitungsstation mit einem zentralen Formwerkzeug und äußeren Formwerkzeugen verformt.

Im Hinblick auf die weiter steigenden Anforderungen an die Produktqualität von Glasbehältnissen zur Verwendung als Primär-Packmittel für pharmazeutische Wirkstoffe besteht somit weiterer Verbesserungsbedarf.

### Zusammenfassung der Erfindung

Es ist eine allgemeine Aufgabe der vorliegenden Erfindung, die Bedingungen bei der Herstellung von Glasbehältnissen durch Heißumformung aus einem Glasrohr dahingehend zu verbessern, dass Glasbehältnisse mit gleichbleibend hoher Qualität und gleichbleibend präzisen Abmessungen im Bereich eines Endabschnitts mit einer Öffnung, beispielsweise im Bereich einer Durchgangsöffnung eines Vials oder einer Karpule oder eines Spritzenkonus einer Spritze, auch mit sehr hohen Taktraten zuverlässig und effizient hergestellt werden können. Insbesondere ist es eine Aufgabe der vorliegenden Erfindung, ein verbessertes Verfahren und eine verbesserte Vorrichtung zum Formen von Endabschnitten mit einer Öffnung an Glasbehältnissen, insbesondere zum Anformen von Hälsen mit einer Halsöffnung bei Vials oder Karpulen oder zum Formen eines Spritzenkonus mit einer Ausstoßöffnung bei Spritzen, die durch Heißumformung aus einem Glasrohr hergestellt werden, bereitzustellen, womit Glasbehältnisse mit gleichbleibend hoher Qualität und gleichbleibend präzisen Abmessungen im Bereich des Endabschnitts mit der Öffnung auch mit sehr hohen Taktraten zuverlässig und effizient hergestellt werden können.

Diese Aufgabe wird durch ein Verfahren nach Anspruch 1, durch eine Vorrichtung nach Anspruch 9 und durch eine Verwendung nach Anspruch 14 gelöst. Weitere vorteilhafte Ausführungsformen sind Gegenstand der rückbezogenen Unteransprüche.

Gemäß der vorliegenden Erfindung wird ein Verfahren zum Formen von Endabschnitten mit einer Öffnung an Glasbehältnissen bereitgestellt, die durch Heißumformung aus einem Glasrohr hergestellt werden, insbesondere an Glasbehältnissen zur Aufbewahrung von pharmazeutischen Wirkstoffen, bei welchem Verfahren an zumindest einem Ende der Glasbehältnisse durch Heißumformung und Zusammenwirken eines zentral angeordneten Öffnungs-Formungswerkzeugs mit zumindest diesem einem zugeordneten Formwerkzeug ein Endabschnitt mit einer Öffnung ausgebildet wird, insbesondere ein Hals mit einer Halsöffnung, indem in die Öffnung das Öffnungs-Formungswerkzeug eingeführt wird und von außen gegen die Öffnung Formwerkzeuge zur Formgebung einer Außenkontur des Endabschnitts wirken und/oder indem gegen das jeweilige Ende des Glasrohrs eine als Formwerkzeug wirkende Platte zur Formgebung eines Mündungsrandes der Öffnung wirkt. Dabei werden für jedes Glasrohr Abmessungsdaten bereitgestellt, insbesondere betreffend eine oder mehrere der folgenden Größen: Wandstärke, Außendurchmesser und Innendurchmesser des zur Herstellung verwendeten Glasrohrs. Diese Abmessungsdaten werden bevorzugt aufgelöst für mehrere Unterabschnitte des zur Herstellung verwendeten Glasrohrs in Längsrichtung oder in Längsrichtung und Umfangsrichtung bereitgestellt

Erfindungsgemäß wird die Position von zumindest einem mit dem zentralen Öffnungs-Formungswerkzeug zusammenwirkenden Formwerkzeug in axialer Richtung der Glasbehältnisse (z-Richtung) in Entsprechung zu den bereitgestellten Abmessungsdaten für das jeweilige Glasrohr motorisch bzw. automatisch verstellt, um Schwankungen des Glasvolumens des zu bearbeitenden Glasrohrs im Bereich der Heißformung zu kompensieren. Dabei wird die Position des Formwerkzeugs in den Richtungen senkrecht zur axialen Richtung der Glasbehältnisse (in x- und y-Richtung) bevorzugt konstant gehalten, sodass die Abmessungen der fertigen Glasbehältnisse senkrecht zur axialen Richtung, also insbesondere in radialer Richtung, konstant sind und den gewünschten Soll-Werten entsprechen. Schwankungen des Glasvolumens des zu verarbeitenden Glasrohrs im Bereich der Heissumformung werden erfindungsgemäß Verschieben des zumindest einen mit dem Öffnungs-Formungswerkzeug zusammenwirkenden Formwerkzeugs in der axialen Richtung kompensiert. Mit anderen Worten: Glasvolumenschwankungen im umzuformenden Bereich werden bei Konstanthalten der Abmessungen des fertigen Glasbehältnisses in einer Richtung senkrecht zur axialen Richtung dadurch kompensiert, dass die Eingriffsposition des jeweiligen Formwerkzeugs entsprechend den Glasvolumenschwankungen in der axialen Richtung relativ zu dem Glasrohr verstellt werden. Somit können die Soll-Abmessungen senkrecht zur axialen Richtung mit höchster Präzision eingehalten werden. Untersuchungen der Erfinder haben gezeigt, dass eine Dimensionsgenauigkeit senkrecht zur axialen Richtung für viele Eigenschaften der Glasbehältnisse sehr wichtig ist. So ist beispielsweise eine Dimensionsgenauigkeit senkrecht zur axialen Richtung für einen festen, abdichtenden Sitz von Dichtkappen, Stopfen oder anderen Verschlusselementen im Bereich einer Halsöffnung von Vials oder Karpulen oder eines Luer-Locks an einem Spritzenkonus eines Spritzenkörpers sehr wichtig, während eine Dimensionsgenauigkeit in der axialen Richtung hierfür weniger wichtig sein können.

Gemäß einer weiteren Ausführungsform wird die Verstellung der Position des zumindest einen Formwerkzeugs in axialer Richtung vor Beginn der Heissumformung des Endabschnitts, insbesondere des Halses oder Spritzenkonus, ausgeführt, wobei die Position des zumindest einen Formwerkzeugs in axialer Richtung während der Heissumformung des Endabschnitts konstant gehalten. Die Position des jeweiligen Formwerkzeugs wird also während der eigentlichen Umformung des Endabschnitts mit der Öffnung konstant gehalten. Kanten oder Rundungen an dem herzustellenden Glasbehältnis können somit exakt geformt werden, ohne dass es aufgrund einer Verstellung während der Heissumformung zu Abweichungen kommt. Nach dieser bevorzugten Ausführungsform erfolgt die Verstellung der Formwerkzeuge somit getaktet, synchron mit der Förderung der umzuformenden Glasrohre von Bearbeitungsstation zu Bearbeitungsstation in der Heißumformungsvorrichtung. Dabei erfolgt die Verstellung der Formwerkzeuge jeweils schneller, bevorzugt deutlich schneller im Vergleich zu einer Zeitdauer, die benötigt wird, um die umzuformenden Glasrohre von Bearbeitungsstation zu Bearbeitungsstation in der Heißumformungsvorrichtung zu fördern.

Durchläuft das umzuformende Glasrohr nacheinander mehrere Bearbeitungsstationen zur Heissumformung des Endabschnitts, so werden bevorzugt die Positionen der Formwerkzeuge an sämtlichen dieser mehreren Bearbeitungsstationen um die gleiche Distanz in axialer Richtung der Glasbehältnisse (z-Richtung) in Entsprechung zu den bereitgestellten Abmessungsdaten für das jeweilige Glasrohr motorisch verstellt, wodurch die Abmessungen der Glasbehältnisse im Bereich des Endabschnitts in der axialen Richtung trotz Verstellung der Formwerkzeuge in der axialen Richtung konstant gehalten werden können. Im Falle von Glasfläschchen (Vials) oder Karpulen (cartridge) können so die Lage und Abmessungen eines Übergangsbereichs zwischen einer zylindrischen Seitenwand des Glasbehälters mit konstantem Außendurchmesser und dem Ende des Glasbehälters, an dem die eigentliche Halsöffnung mit konstanten Außenabmessungen ausgebildet wird, also beispielsweise einem Rollrand, auch in der axialen Richtung konstant gehalten werden.

Gemäß einer weiteren Ausführungsform wirken mehrere Formwerkzeuge mit dem zentral angeordneten Öffnungs-Formungswerkzeug während der Heissumformung zusammen, wobei sämtliche Formwerkzeuge gemeinsam in Entsprechung zu den Abmessungsdaten für das jeweilige Glasrohr in der axialen Richtung verstellt werden, um Schwankungen des Glasvolumens des zu verarbeitenden Glasrohrs im Bereich der Heissumformung zu kompensieren. Bevorzugt wird dabei das zentral angeordnete Öffnungs-Formungswerkzeug mit diesen Formwerkzeugen verstellt. Allerdings kann auch eine axiale Verstellbarkeit des zentralen Öffnungs-Formungswerkzeugs unabhängig von dem mit diesem zusammenwirkenden Formwerkzeugen vorgesehen sein, beispielsweise um einen als Öffnungs-Formungswerkzeug wirkenden Formdorn oder Pin in einer bestimmten Phase der Heissumformung, beispielsweise gegen Ende der Heissumformung, gezielt weiter in die Durchgangsöffnung hinzufahren.

Gemäß einer weiteren Ausführungsform beinhalten die Abmessungsdaten zumindest eine Wandstärke des jeweiligen Glasrohrs im Bereich der Heissumformung. Schwankungen der Wandstärke im umzuformenden Bereich korrespondieren zu Glasvolumenschwankungen in diesem Bereich, die mit der erfindungsgemäßen Verstellung von Formwerkzeugen in axialer Richtung kompensiert werden können. Selbstverständlich können die Abmessungsdaten auch weitere geometrische Abmessungen im umzuformenden Bereich des Ausgangs-Glasrohrs beinhalten, insbesondere den Innen- und/oder Außendurchmesser des Ausgangs-Glasrohrs.

Gemäß einer weiteren Ausführungsform werden die Abmessungsdaten bereitgestellt, indem für das jeweilige Glasrohr oder für ein Glasbehältnis, das in einer vorherigen Heissumformung hergestellt wurde, Abmessungsdaten nicht-taktil ermittelt werden, insbesondere mittels eines Video-Inspektionssystems mit Bildauswertungssoftware, um die Abmessungen des Ausgangs-Glasrohrs im umzuformenden Bereich präzise zu bestimmen. Die Abmessungsdaten sind dabei bevorzugt ortsaufgelöst sowohl in der axialen Richtung als auch in der Umfangsrichtung des Ausgangs-Glasrohrs, sodass das Glasvolumen im umzuformenden Bereich und dessen Schwankungen anhand der Abmessungsdaten genau berechnet werden können.

Gemäß einer weiteren Ausführungsform werden die Abmessungsdaten für das jeweilige Glasrohr alternativ durch Einlesen von Daten aus einer Datenbank oder eines Datenblatts mit rohr-spezifischen Daten zu Abmessungen für das jeweilige Glasrohr bereitgestellt. Somit brauchen die Ausgangs-Glasrohre beim weiterverarbeitenden Betrieb vor der Heissumformung nicht erneut aufwändig ermittelt werden, weil die rohr-spezifischen Daten bereits vom Hersteller des Ausgangs-Glasrohrs mit hoher Genauigkeit bestimmt und in der Datenbank, einem elektronischen Speichermedium oder auf einem Datenblatt aufgezeichnet sind.

Gemäß einer weiteren Ausführungsform werden die Abmessungsdaten von einer Steuerungs- oder Regelungseinrichtung weiter verarbeitet, die anhand der ermittelten Abmessungsdaten eine Steuerungs- oder Regelgröße an ein Stellglied ausgibt, das einer Verstelleinrichtung zugeordnet ist, wobei das Stellglied das zumindest eine Formwerkzeug in Entsprechung zu der Steuerungs- oder Regelgröße in der axialen Richtung verstellt.

Gemäß einer weiteren Ausführungsform wird die Steuerungs- oder Regelgröße durch Vergleich der ermittelten Abmessungsdaten mit Sollwerten bestimmt, die beispielsweise in einer Nachschlagetabelle, einem Datenspeicher oder dergleichen gespeichert sind. Diese Sollwerte legen für das jeweils umzuformende Glasvolumen des Ausgangs-Glasrohrs eine geeignete Position des jeweiligen Formwerkzeugs in der z-Richtung fest, sodass etwaige Glasvolumenschwankungen zuverlässig kompensiert werden können. Diese Sollwerte können durch praktische Tests der Heissumformungsvorrichtung ermittelt werden, können jedoch auch durch Berechnungen, Simulationen oder dergleichen ermittelt werden.

Gemäß einer weiteren Ausführungsform wird die Position des zumindest einen Formwerkzeugs in einer Richtung senkrecht zu der axialen Richtung vor Beginn der Heissumformung des Endabschnitts mit der Öffnung verstellt, während der Heissumformung des Endabschnitts mit der Öffnung jedoch konstant gehalten. Die Position des jeweiligen Formwerkzeugs wird also auch in der Richtung senkrecht zu der axialen Richtung während der eigentlichen Halsumformung konstant gehalten. Weil das Glasvolumen im Heissumformungsbereich den Spalt zwischen dem mittig angeordneten Öffnungs-Formungswerkzeug und den außen angeordneten Formrollen oder dergleichen aufgrund der vorgenannten Verstellung in der axialen Richtung optimal ausfüllt, können die gewünschten Dimensionen des fertigen Glasbehältnisses exakt eingehalten werden, ohne dass es aufgrund einer Verstellung während der Heissumformung zu Abweichungen kommt. Nach dieser bevorzugten Ausführungsform erfolgt die Verstellung der Formwerkzeuge somit getaktet, synchron mit der Förderung der umzuformenden Glasrohre von Bearbeitungsstation zu Bearbeitungsstation in der Heissumformungsvorrichtung.

Gemäß einer weiteren Ausführungsform, die insbesondere die Herstellung von Glasvials, Karpulen oder Spritzenkörpern betrifft, wird zum Verstellen des zumindest einen Formwerkzeugs die Platte zur Formgebung des Mündungsrandes, eine Formrolle zur Formgebung des Endabschnitts und/oder eine Formrolle zur Formung einer Schulter oder Verjüngung im Bereich des Endabschnitts des Glasbehältnisses in der axialen Richtung verstellt.

Gemäß einer weiteren Ausführungsform wird die Heissumformung in einer Rundläufer-Maschine ausgeführt, die einen drehbeweglich gelagerten Drehtisch aufweist, an dem eine Mehrzahl von Haltefuttern in einer Umfangsrichtung verteilt angeordnet sind, wobei in den Haltefuttern jeweils ein Glasrohr gehalten ist und die Glasrohre bei einer Drehbewegung des Drehtisches schrittweise eine Reihe von Bearbeitungsstationen durchlaufen, an denen die Heissumformung mit Hilfe von Gasbrennern und/oder von Bearbeitungswerkzeugen erfolgt, wobei zumindest eine der Bearbeitungsstationen zumindest ein Formwerkzeug aufweist, das in der axialen Richtung wie vorstehend beschrieben verstellt wird, die Abmessungsdaten für jedes der an dem Drehtisch gehaltenen Glasrohre bereitgestellt werden und die Position des zumindest einen Formwerkzeugs für jedes der an dem Drehtisch gehaltenen Glasrohre in der axialen Richtung in Entsprechung zu den Abmessungsdaten für das jeweilige Glasrohr individuell zur Heissumformung motorisch verstellt wird.

Gemäß einer weiteren Ausführungsform wird die Verstellung der Position des zumindest einen Formwerkzeugs in der axialen Richtung (z) vor Beginn der Heissumformung des Endabschnitts mit der Öffnung ausgeführt und die Position des zumindest einen Formwerkzeugs in der axialen Richtung (z) während der Heissumformung des Endabschnitts mit der Öffnung konstant gehalten, wobei eine Zeitdauer zur Verstellung der Position des zumindest einen Formwerkzeugs in der axialen Richtung (z) vor Beginn der Heissumformung des Endabschnitts kürzer ist als eine Zeitdauer, die benötigt wird, um das Glasrohr durch Drehbewegung des Drehtisches von einer ersten Bearbeitungsstation zu einer in Drehrichtung betrachtet nachgeordneten zweiten Bearbeitungsstation zu verstellen.

Gemäß einer weiteren Ausführungsform wird die Verstellung der Position des zumindest einen Formwerkzeugs in axialer Richtung in Entsprechung zu den Abmessungsdaten für das jeweilige Glasrohr so ausgeführt, dass eine Varianz von Abmessungen des Glasbehältnisses nach der Heissumformung im Bereich des Endabschnitts mit der Öffnung, insbesondere von Wandstärken des Glasbehältnisses im Bereich einer Schulter, eines Halses und/oder eines Rollrands oder Spritzenkonus quer zur Längsrichtung des Glasbehältnisses, zumindest in einer Richtung senkrecht zur axialen Richtung (z) des Glasbehältnisses mit der Varianz der Abmessungsdaten des zur Herstellung verwendeten Glasrohrs in anderer Weise korreliert ist. Denn aufgrund der Verstellung des zumindest einen Formwerkzeugs in der axialen Richtung können die Abmessungen des fertigen Glasbehältnisses in einer Richtung senkrecht dazu praktisch exakt vorgegeben werden, sind jedoch nicht mehr abhängig von Glasvolumenschwankungen im umzuformenden Bereich, die durch Dimensionsschwankungen des Ausgangs-Glasrohrs bedingt sind.

Gemäß einem weiteren Gesichtspunkt der vorliegenden Erfindung wird eine Heissformgebungsvorrichtung zum Formen von Endabschnitten mit einer Öffnung, insbesondere von Hälsen an Vials oder Karpulen oder eines Spritzenkonus an einer Glasspritze bereitgestellt, insbesondere an Glasbehältnissen zur Aufbewahrung von pharmazeutischen Wirkstoffen wobei die Glasbehältnisse an zumindest einem Ende einen Endabschnitt mit einer Öffnung, beispielsweise einen Hals mit einer Halsöffnung oder einen Spritzenkonus, aufweisen, mit einer Bearbeitungsstation, an der die Heissumformung mit Hilfe von Gasbrennern und/oder von Bearbeitungswerkzeugen erfolgt, wobei die Bearbeitungsstation ein zentral angeordnetes Öffnungs-Formungswerkzeug und zumindest ein Formwerkzeug zur Formgebung einer Außenkontur des Endabschnitts und/oder zur Formgebung eines Mündungsrandes der Öffnung aufweist, sodass an dem zumindest einen Ende der Glasbehältnisse ein Endabschnitt mit einer Durchgangsöffnung, insbesondere ein Hals mit einer Halsöffnung oder ein Spritzenkonus, ausbildbar ist, indem in die Öffnung das zentral angeordnete Öffnungs-Formungswerkzeug eingeführt wird und von außen gegen die Öffnung Formwerkzeuge zur Formgebung einer Außenkontur des Endabschnitts mit der Öffnung wirken und/oder indem gegen das jeweilige Ende des Glasrohrs die als Formwerkzeug wirkende Platte zur Formgebung eines Mündungsrandes der Öffnung wirkt. Dabei ist eine Verstelleinrichtung für das zumindest eine Formwerkzeug vorgesehen, die ausgelegt ist, um die Position des zumindest einen Formwerkzeugs in axialer Richtung der Glasbehältnisse relativ zu dem jeweiligen Glasrohr zu verstellen.

Erfindungsgemäß ist der Verstelleinrichtung ein Stellglied zugeordnet, wobei eine Steuerungs- oder Regelungseinrichtung mit einer Schnittstelle zur Eingabe von Abmessungsdaten, die für das jeweils zu verarbeitende Glasrohr ermittelt wurden, vorgesehen, wobei die Steuerungs- oder Regelungseinrichtung ausgelegt ist, um basierend auf den eingegebenen Abmessungsdaten eine Steuerungs- oder Regelgröße an das Stellglied auszugeben, sodass anhand des Stellglieds das zumindest eine Formwerkzeug in Entsprechung zu der Steuerungs- oder Regelgröße in der axialen Richtung verstellbar ist, um Schwankungen des Glasvolumens des zu bearbeitenden Glasrohrs im Bereich der Heißformung zu kompensieren. Zur Verstellung können elektrisch betätigte Verstelleinrichtungen verwendet werden, insbesondere Schrittmotoren oder piezoelektrische Aktuatoren.

Gemäß einer weiteren Ausführungsform verstellt das Stellglied das zumindest eine Formelement in Entsprechung zu der Steuerungs- oder Regelgröße in der axialen Richtung. Gemäß einer weiteren Ausführungsform ist die Schnittstelle mit der nicht-taktilen Erfassungseinrichtung verbunden.

Gemäß einer weiteren Ausführungsform ist die Schnittstelle weiterhin ausgelegt, um die Abmessungsdaten für das jeweilige Glasrohr von einer Datenbank oder einem Datenblatt mit rohr-spezifischen Daten für das jeweilige Glasrohr einzulesen.

Gemäß einer weiteren Ausführungsform ist die zumindest eine Verstelleinrichtung weiterhin ausgelegt ist, um eine Winkelstellung des zugeordneten Formwerkzeugs bezüglich einer Drehachse, um die das jeweilige Glasrohr während der Heissumformung rotiert, zu verstellen, wobei weiterhin eine Verstelleinrichtung zum Verstellen sämtlicher Formwerkzeuge der jeweiligen Bearbeitungsstation in einer Richtung senkrecht zu der axialen Richtung vorgesehen ist, wobei diese Verstelleinrichtung so ausgelegt ist, dass eine Mitte der jeweiligen Bearbeitungsstation exakt mit der Drehachse fluchtet.

Ein weiterer Gesichtspunkt der vorliegenden Erfindung betrifft die Verwendung des vorgenannten Verfahrens oder der vorgenannten Heissformgebungsvorrichtung zur Herstellung von Glasbehältnissen, insbesondere von Glasbehältnissen zur Aufbewahrung von pharmazeutischen Wirkstoffen.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: die Bedingungen bei der Heissformgebung des Halses eines Glasfläschchens (Vial) gemäß dem Stand der Technik;
- Fig. 2a: die Variation des Außendurchmessers von sechs Glasrohren, die typischerweise zur Herstellung von Glasfläschchen durch Heissformgebung verwendet werden;
- Fig. 2b und 2c: in einer schematischen Schnittansicht eine Vorgehensweise zur Kompensation von Dimensionsschwankungen bei der Herstellung von Glasfläschchen durch Heissformgebung nach dem Stand der Technik;
- Fig. 3: den Rollrandaußendurchmesser von Glasvials, hergestellt mit einem Verfahren gemäß dem Stand der Technik, aufgetragen gegen die fortlaufende Produktionszeit;
- Fig. 4: ein Histogramm für die Verteilung der Dimensionsabweichungen im Bereich der Halsöffnung bei Glasvials, die mit einem Verfahren gemäß dem Stand der Technik hergestellt wurden;
- Fig. 5a: in einer schematischen Draufsicht Teile einer Heissformgebungsvorrichtung gemäß der vorliegenden Erfindung;
- Fig. 5b: in einer schematischen Seitenansicht einen Ausschnitt aus einer Heissformgebungsvorrichtung gemäß der vorliegenden Erfindung;
- Fig. 5c: in einer schematischen Darstellung eine Heissformgebungsvorrichtung gemäß einer weiteren Ausführungsform der vorliegenden Erfindung;
- Fig. 6a: die Bedingungen zu Beginn einer Heissformgebung des Halses eines Glasfläschchens (Vial) gemäß der vorliegenden Erfindung;
- Fig. 6b: die Bedingungen in einer späteren Phase der Heissformgebung des Halses eines Glasfläschchens (Vial) gemäß der vorliegenden Erfindung;
- Fig. 7: in einem schematischen Diagramm die Steuerungs- oder Regelungseinrichtung in einer Heissformgebungsvorrichtung gemäß der vorliegenden Erfindung;
- Fig. 8: in einem schematischen Flussdiagramm die wichtigsten Prozessschritte eines Verfahrens zur Heissformgebung gemäß der vorliegenden Erfindung
- Fig. 9: den Rollrandaußendurchmesser von Glasvials, hergestellt mit einem Verfahren gemäß der vorliegenden Erfindung, aufgetragen gegen die fortlaufende Produktionszeit;
- Fig. 10: ein Histogramm für die Verteilung der Dimensionsabweichungen im Bereich der Halsöffnung bei Glasvials, die mit einem Verfahren gemäß der vorliegenden Erfindung hergestellt wurden;
- Fig. 11a: die geometrischen Verhältnisse eines Glasvials gemäß der vorliegenden Erfindung;
- Fig. 11b: die geometrischen Verhältnisse eines Glasvials gemäß der vorliegenden Erfindung im Bereich der Halsöffnung; und
- Fig. 11c bis 11e: die geometrischen Verhältnisse von weiteren Glasvials gemäß der vorliegenden Erfindung im Bereich der Halsöffnung.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

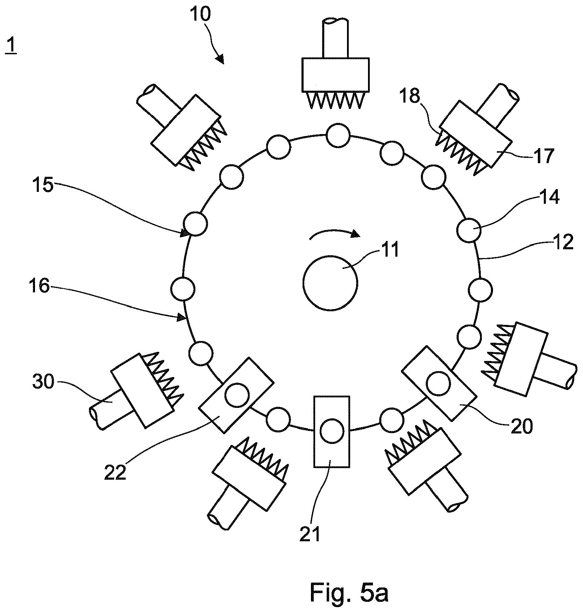

Die Fig. 5a zeigt in einer schematischen Draufsicht den grundsätzlichen Aufbau einer Heissformgebungsvorrichtung 1 gemäß der vorliegenden Erfindung, die der Herstellung von Glasbehältnissen aus einem Glasrohr 14 dient, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung von pharmazeutischen Wirkstoffen. Die Heissformgebungsvorrichtung 1 umfasst dabei eine sog. Muttermaschine 10, die insbesondere einer Heissumformung des zugeführten Glasrohrs 60 an einem dem späteren Boden oder offenen Ende des Glasbehältnisses gegenüberliegenden Ende dient, insbesondere zum Anformen eines Halses mit einer Halsöffnung oder eines Spritzenkonus mit einer Ausstoßöffnung.

Glasrohre 14 werden an der Zuführposition 15 in der bekannten Weise zugeführt und in Haltefuttern auf einer geeigneten Bearbeitungshöhe gehalten, die über den Umfang eines Drehtisches 12 verteilt angeordnet sind. Der Drehtisch 12 ist in der Art eines Drehkranzes mit Haltefuttern ausgebildet und ist an der zugeordneten Säule 11 drehbeweglich gelagert. Der Drehtisch 12 wird schrittweise um die zugeordnete Säule 11 gedreht bzw. geschwenkt. Dabei werden die an den Haltefuttern gehaltenen Glasrohre 14 schrittweise an Gasbrennern 17 und verschiedenen Bearbeitungsstationen 20-22 vorbeigeführt, an denen während einer jeweiligen Stillstandszeit die Bearbeitung und Heissumformung zu den Glasbehältnissen erfolgt. Nach Passieren der Bearbeitungsstationen 20-22 werden die Glasbehältnisse zumindest im Bereich des Halses und der Halsöffnung nicht-taktil mit Hilfe eines Inspektionssystems 30 geprüft und ihre Eigenschaften dokumentiert. Bei dem Inspektionssystem 30 kann es sich beispielsweise um eine Videokamera mit einer Bildauswertungssoftware handeln, womit anhand der von der Videokamera aufgenommenen Bilder geometrischen Abmessungen der Glasbehältnisse ausgewertet werden, beispielsweise im Falle von Glasvials die geometrischen Abmessungen, die in der Fig. 11a und 11b zusammengefasst sind. Abschließend werden die Glasbehältnisse an der Position 16 an eine nachgeordnete Bearbeitungsmaschine übergeben.

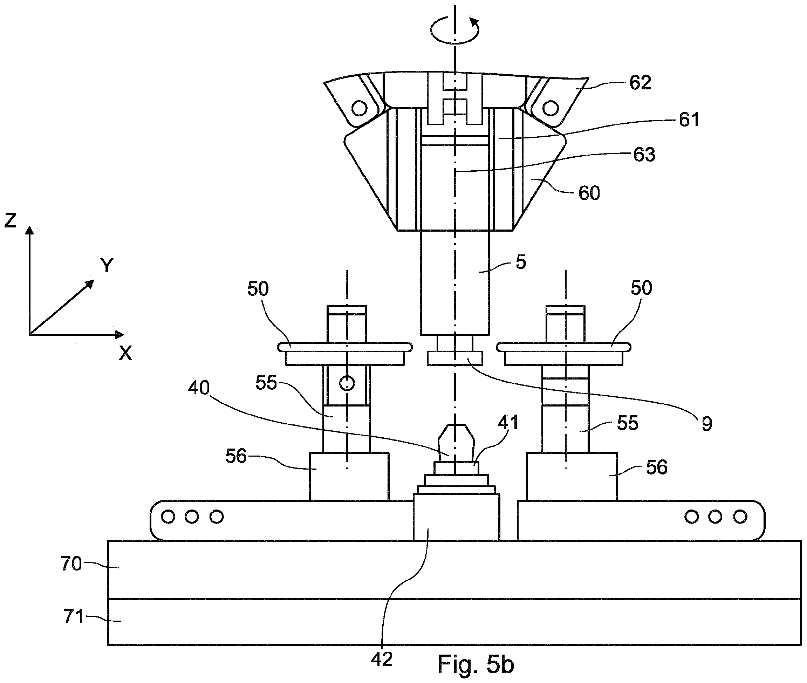

Die Fig. 5b zeigt in einer schematischen Seitenansicht einen Ausschnitt aus der Heissformgebungsvorrichtung gemäß der Fig. 5a im Bereich einer der Bearbeitungsstationen, die zum Anformen eines Halses und zur Formung der Halsöffnung mit einer vorbestimmten Geometrie dient. Das Vial 5 ist kopfüber in ein rotierendes Haltefutter 60 eingespannt und von Klemmbacken 61 des Haltefutters 60 gehalten, die durch Verstellen von Spannhebeln 62 geöffnet und radial verstellt werden können. Das Haltefutter 60 dreht sich während einer Heissumformung mit sehr hoher Drehzahl um die Drehachse 63, die sehr präzise senkrecht ausgerichtet ist. In dem Haltefutter 60 ist das zu bearbeitende Glasrohr bzw. nach der Heissumformung das Glasvial 5 exakt senkrecht (exakt parallel zur z-Richtung) ausgerichtet, sodass beim Rotieren um die Drehachse 63 keine Taumelbewegungen auftreten.

Unterhalb des Haltefutters 60 sind auf einer von Verstelltischen 70, 71 gebildeten Verstelleinheit ein zentraler Formdorn 40 (zentrales Öffnungs-Formungswerkzeug) und mehrere Formrollen 50 angeordnet, die als Formwerkzeuge zur Heissumformung im Bereich des späteren Endabschnitts wirken und zur Heissumformung mit dem Formdorn zusammenwirken. Der Formdorn 40 ist mittig angeordnet, exakt senkrecht ausgerichtet und seine Mitte fluchtet exakt mit der Drehachse 63 des darüber befindlichen Haltefutters 60. Hierzu können die Winkelorientierung des Formdorns 40 und die Position des Formdorns in der x-Richtung und y-Richtung präzise nachjustiert werden, wozu auf dem oberen Verstelltisch 70 eine entsprechend ausgelegte Verstelleinrichtung 40 vorgesehen ist, auf die der Formdorn 40 montiert ist.

Statt eines Formdorns kann als zentrales Öffnungs-Formungswerkzeug auch ein Pin bzw. dünner Dreht verwendet werden, um den Innendurchmesser der Durchgangsöffnung im Bereich des Endabschnitts präzise vorzugeben.

Die als Formwerkzeuge wirkenden Formrollen 50 sind an Säulen 55 drehbeweglich gelagert, die auf zugeordneten Verstelleinrichtungen 56 montiert sind, die auf dem oberen Verstelltisch 70 angeordnet sind. Auch mit den Verstelleinrichtungen 56 können in entsprechender Weise die Postionen der Säulen 55 und der daran gelagerten Formrollen 50 in der x-Richtung und y-Richtung sowie die Höhe der Formrollen 50 relativ zum Formdorn 40 präzise nachjustiert werden, um die Heissformgebungsvorrichtung einzurichten.

Der obere Verstelltisch 70 ist auf einen unteren Verstelltisch 71 montiert, der auf einem Arbeitstisch (nicht gezeigt) der Heissformgebungsvorrichtung im Bereich einer der Bearbeitungsstationen angeordnet ist.

Unterhalb des Halses 9 ist der Formdorn 40 auf einer Anschlagplatte 41 montiert. Der Formdorn 40 ist exakt senkrecht ausgerichtet. Zur Heissumformung wird der Formdorn 40 in die Halsöffnung des Vials 5 eingeführt, wobei von außen die Formrollen 50 gegen die Halsöffnung wirken, um die Außenkontur der Halsöffnung festzulegen, und wobei die Anschlagplatte 41 gegen das Ende der Heissumformung wirkt, um die Form des Mündungsrands präzise festzulegen. Zwischen den Formrollen 50, dem Formdorn 40 und der Anschlagplatte 41 ist ein Hohlraum ausgebildet, dessen Kontur durch das Außenprofil der Formrollen 50 festgelegt ist. Die Außenkontur und der Mündungsrand des Glasbehältnisses 5 passen sich während der Heissformgebung der Kontur dieses Hohlraums exakt an. Insbesondere entspricht die Form des späteren Rollrands 9 am oberen Ende des auszubildenden Behälters (vgl. Darstellung in den Figuren 11a bis 11e) exakt der Form des zwischen den Formrollen 50, dem Formdorn 40 und der Anschlagplatte 41 ausgebildeten Hohlraums.

Der obere Verstelltisch 71 ist als Kreuzschlitten ausgebildet, der in zwei Richtungen (x, y) senkrecht zu der Drehachse 63 des Haltefutters 60 verstellt werden kann. Der untere Verstelltisch 70 kann in der z-Richtung, also senkrecht, präzise verstellt werden, um sämtliche Formwerkzeuge 50 und den Formdorn 40 mit der Anschlagplatte 41 im Heissumformungsbereich gleichzeitig senkrecht auf eine geeignete Arbeitshöhe zu verstellen.

In der Verstelleinrichtungen 42 kann ein Aktuator vorgesehen sein, um den Formdorn 40 in der z-Richtung unabhängig von den zugeordneten Formrollen 50 zu verstellen, beispielsweise um den Formdorn 40 in einer späten Phase einer Heissumformung weiter in die Öffnung eines Glasbehältnisses hineinzufahren. In der z-Verstelleinrichtung 71 ist ein Aktuator vorgesehen, um die zugeordneten Formrollen 50 gemeinsam mit dem Formdorn 40 mit der Anschlagplatte 41 zur Kompensation von Glasvolumenschwankungen des Ausgangs-Glasrohrs präzise in der z-Richtung zu verstellen. Bei diesem Aktuator kann es sich um einen piezoelektrischen Antrieb oder einen Miniatur-Schrittmotor handeln, um die Höhe des Formdorns 40, der Anschlagplatte 41 und der Formrollen 50 gemeinsam präzise zu verstellen. Ein Verstellweg von bis zu 0,1 mm oder 0,15 mm kann für die Zwecke der vorliegenden Erfindung ausreichend sein, um für konstante Abmessungen im Bereich der Halsöffnung zu sorgen, wie nachfolgend ausgeführt.

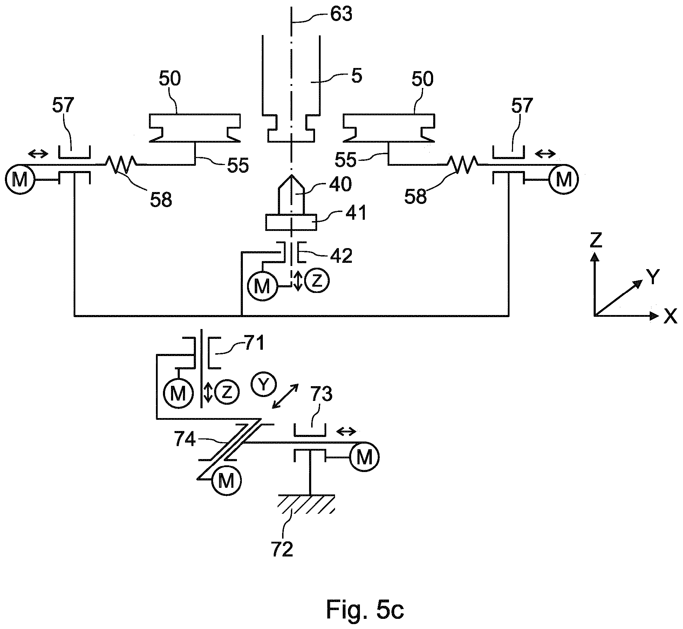

Weitere Einzelheiten der Verstellmöglichkeiten sind in dem Schemadiagramm gemäß der Fig. 5c dargestellt. Erkennbar ist, dass der Formdorn 40, die Anschlagplatte 41 und die Formrollen 50 gemeinsam durch Ansteuern eines Aktuators, beispielsweise eines Schrittmotors M, gemeinsam mittels der z-Verstelleinrichtung 71 in der z-Richtung verstellt werden können. Die weitere z-Verstelleinrichtung 42 dient einer Verstellung des Formdorns 40 und der Anschlagplatte 41 relativ zu den übrigen Formwerkzeugen 50 und dem Arbeitstisch 72. Die Positionen der Formrollen 50 können in einer Richtung senkrecht zur z-Richtung, insbesondere in radialer Richtung relativ zu dem Formdorn 40, individuell verstellt werden, und zwar mittels der radialen Verstelleinrichtungen 57 und durch Ansteuern der zugeordneten Motoren M. Während der eigentlichen Heissumformung sind die Positionen der Formrollen 50 jedoch bevorzugt konstant. Ggf. können die Positionen der Formrollen 50 mittels Federn 58 geringfügig in radialer Richtung verstellt werden. Zur gemeinsamen Verstellung der Formrollen 50, des Formdorns 40 und der Anschlagplatte 41 dienen weitere Verstelleinrichtungen 73, 74 mit zugeordneten Motoren M.

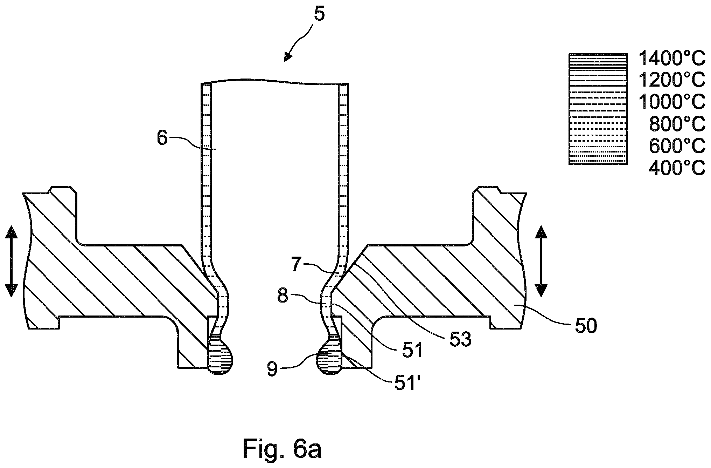

In das Haltefutter 60 wird an der Zuführposition 15 (vgl. Fig. 5a) zunächst ein Glasrohr oder ein halbfertiges Glas-Zwischenprodukt (nachfolgend Werkstück) mit einem geschlossenen Boden eingespannt. Anschließend wird durch schrittweises Schwenken des Drehtisches 12 das Werkstück an den Brennerflammen 18 von mehreren Gasbrennern 17 vorbeigeführt und geeignet erwärmt, bis im Bereich der späteren Halsöffnung das Glas wärmeweich und somit plastisch formbar ist. In der ersten Bearbeitungsstation 20 wird zunächst der Formdorn 40 in die Halsöffnung des rotierenden Werkstücks eingeführt und werden Formrollen 50 auf der Höhe der späteren Schulter 7 (vgl. Fig. 6a) gegen das rotierende Werkstück geführt, wodurch die Schulter 7 geformt wird.

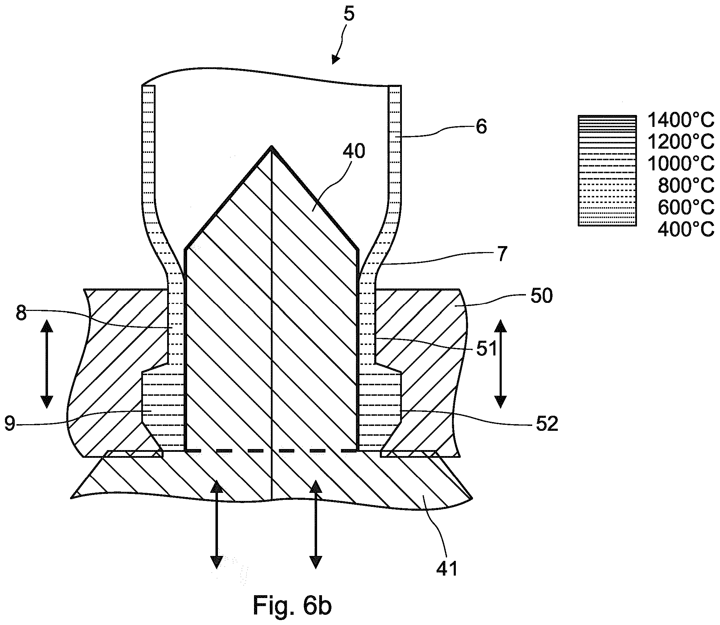

Anschließend wird das Werkstück im wärmeweichen Zustand des Glases an die Bearbeitungsstation 21 übergeben, in der die Halsöffnung mit dem Mündungsbereich präzise geformt wird, wie in der Fig. 6b gezeigt. Hierzu werden Formrollen 50 mit dem in der Fig. 6b gezeigten Profil verwendet, das einen konkaven Formungsabschnitt 52 und an seinem oberen und unteren Ende ebene, sich vertikal erstreckende Abschnitte 51 aufweist. Das untere Ende der Formrollen 50 ist auf der Höhe der Oberseite der Anschlagplatte 41 angeordnet, von der der Formdorn 40 senkrecht abragt. Zwischen den Formrollen 50, dem Formdorn 40 und der Anschlagplatte 41 ist ein Hohlraum ausgebildet, dessen Volumen durch das Profil und die Abmessungen der Formrollen 50 und die Lage der Formrollen 50 relativ zu dem mittig angeordneten Formdorn 40 definiert ist. Genauer gesagt ist dieses Volumen außen durch die gedachten Tangenten an die Formrollen 50 definiert, die gedachten Kreisen entsprechen, die konzentrisch zu dem Formdorn 40 sind.

Wie in der Fig. 6b gezeigt, wirken bei der Heissumformung die Formrollen 50 gegen den Formdorn 40 (das zentrale Öffnungs-Formungswerkzeug), um den dazwischen befindlichen Hals 8 und den Rollrand 9 des Werkstücks 5 zu formen. Weiter wirkt bei der Heissumformung die Anschlagplatte 41 gegen das Ende des Werkstücks 5, um den Mündungsbereich der Halsöffnung zu formen. In diesem Zustand verbleibt das schnell rotierende Werkstück 5 eine geringe Zeitdauer, bis das Glas soweit abgekühlt ist, dass die umgeformte Halsöffnung hinreichend formstabil ist, wie in der Fig. 6b gezeigt.

Wie durch die Doppelpfeile in den Figuren 6a und 6b dargestellt, können die Formrollen 50 und der Formdorn 40 zur Heissumformung mittels einer zugeordneten z-Verstelleinrichtung exakt senkrecht (in z-Richtung) auf eine jeweils geeignete Höhe verstellt werden. Für den Fall, dass das umzuformende Glasrohr nacheinander mehrere Bearbeitungsstationen mit einem Formdorn und Formwerkzeugen, insbesondere Formrollen, durchläuft, wird es bevorzugt, wenn in sämtlichen dieser mehreren Bearbeitungsstationen die Formwerkzeuge, bevorzugt gemeinsam mit dem Formdorn, um die gleiche Distanz in der axialen Richtung verstellt werden. Diese Höhenverstellung in z-Richtung kann für die Formrollen 50 und den Formdorn 40 grundsätzlich auch unabhängig voneinander erfolgen. Bevorzugt werden sämtliche Formrollen 50 gemeinsam mit dem Formdorn 40, und letzterer ggf. unabhängig von der Anschlagplatte 41, in z-Richtung verstellt.

Anders als nach dem Stand der Technik sind die Formrollen 50 bevorzugt nicht radial einwärts gegen den mittig angeordneten Formdorn 40 elastisch vorgespannt. Die Formrollen 50 sind vielmehr während der Heissumformung an festen Positionen, die durch die Drehlagerungen (Säulen) 55 definiert sind (vgl. Fig. 5c), angeordnet. Grundsätzlich kann jedoch auch eine federvorgespannte Lagerung der Formrollen 50 vorgesehen sein.

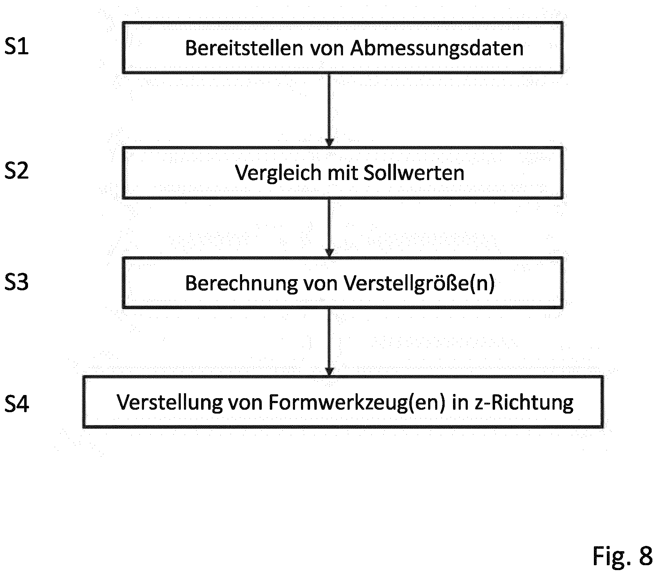

Zum Ausgleich von Dimensionsschwankungen des Werkstücks 5 im Umformungsbereich, insbesondere von Schwankungen der Wandstärke aber auch des Außendurchmessers des Werkstücks 5, wird erfindungsgemäß gemäß dem Flussdiagramm der Fig. 8 wie folgt vorgegangen:
Zunächst werden in dem Schritt S1 für das jeweils umzuformende Werkstück Abmessungsdaten bereitgestellt, und zwar zumindest für den umzuformenden Abschnitt des Werkstücks, also im Bereich der Halsöffnung. Hierzu können die Abmessungsdaten für das jeweils umzuformende Glasrohr nicht-taktil ermittelt werden, insbesondere mittels einer Videokamera mit nachfolgender Bildauswertung der Videobilder zur Ermittlung der Abmessungsdaten, wie beispielsweise Wandstärke und Innen- und Außendurchmesser in dem umzuformenden Bereich. Diese Abmessungsdaten werden dabei aufgelöst in der Umfangsrichtung und in der Längsrichtung des umzuformenden Bereichs ermittelt. Aus diesen Daten lässt sich das tatsächliche Glasvolumen des umzuformenden Bereichs für jedes umzuformende Glasrohr ermitteln.

Diese Abmessungsdaten können inline für das umzuformende Glasrohr ermittelt werden, beispielsweise bei der Übergabe an die Heissumformungsvorrichtung 1 im Bereich 15. Diese Abmessungsdaten können jedoch auch von einem Hersteller bei der Herstellung des Glasrohrs für jedes einzelne Glasrohr ermittelt und in einer Datenbank oder einem Datenspeicher gespeichert oder auf einem Datenblatt gedruckt werden, von wo diese Abmessungsdaten von der Heissumformungsvorrichtung 1 über eine Schnittstelle wieder ausgelesen werden können.

Alternativ werden die Abmessungsdaten für das jeweils umzuformende Glasrohr indirekt ermittelt, nämlich durch Vermessen eines Glasbehältnis, das in einer vorherigen Heissumformung hergestellt wurde, beispielsweise mittels einer Videokamera mit nachfolgender Bildauswertung der Videobilder zur Ermittlung der Abmessungsdaten. Diese Prüfung kann beispielsweise an der Position der Kamera 30 unmittelbar an oder nach der Heissumformungsvorrichtung 1 erfolgen. Auch durch Auswertung der geometrischen Abmessungen im Bereich der Halsöffnung an einem fertigen Glasbehältnis sind Rückschlüsse auf die für die Heissumformung relevanten Abmessungsdaten eines zu einem späteren Zeitpunkt umzuformenden Werkstücks möglich, beispielsweise auf die Wandstärke und den Innen- und Außendurchmesser in dem umzuformenden Bereich des zu dem späteren Zeitpunkt umzuformenden Werkstücks.

Anschließend werden die bereitgestellten Abmessungsdaten von einer Steuerungs- oder Regelungseinrichtung in dem Schritt S2 weiterverarbeitet. Dazu können die ermittelten Abmessungsdaten mit Sollwerten verglichen werden, woraus sich Abweichungen des tatsächlichen Volumens des umzuformenden Bereichs des Werkstücks von einem Soll-Volumen berechnen lassen. Die Sollwerte hierfür können beispielsweise in einer Nachschlagetabelle gespeichert sein, die mit der Steuerungs- oder Regelungseinrichtung verbunden ist.

Aus diesem Vergleich können in Kenntnis des Volumens des tatsächlichen Umformungsbereichs, das durch das Profil und die Abmessungen der Formrollen 50 und die Lage der Formrollen 50 relativ zu dem mittig angeordneten Formdorn 40 definiert ist, Verstellgrößen berechnet werden. Diese Verstellgrößen werden von der Steuerungs- oder Regelungseinrichtung an Stellglieder abgegeben, die der Verstellung des Formdorns 40 und von einem oder mehreren der Formwerkzeuge 50 in z-Richtung dienen, also an den Aktuator in der Verstelleinrichtung 42, der zum Verstellen des Formdorns 40 in der z-Richtung dient, und an die Aktuatoren in den Verstelleinrichtungen 56, die zum Verstellen der Formrollen 50 in der z-Richtung dienen. Diese Verstellung der Formrollen 50 und des Formdorns 40 in z-Richtung kann grundsätzlich individuell und unabhängig voneinander durchgeführt werden und ist in den Figuren 6a und 6b durch die senkrechten Doppelpfeile angeordnet. Bevorzugt werden jedoch die Formrollen 50 und der Formdorn 40 gemeinsam in z-Richtung verstellt, beispielsweise durch Betätigen der gemeinsamen z-Verstelleinrichtung 71 (vgl. Fig. 5b).

Durch diese Verstellung wird das Volumen des tatsächlichen Umformungsbereichs, das durch das Profil und die Abmessungen der Formrollen 50 und die Lage der Formrollen 50 relativ zu dem mittig angeordneten Formdorn 40 mit der Anschlagplatte 41 definiert ist, in der z-Richtung vergrößert ("gestreckt") oder verkleinert ("gestaucht"), sodass Dimensionsschwankungen des umzuformenden Werkstücks im Bereich der Halsöffnung kompensiert werden können. Ist das tatsächliche Glasvolumen im Bereich der Halsöffnung beispielsweise aufgrund einer höheren Wandstärke in diesem Bereich größer, so kann das überschüssige Material durch "Strecken" des Volumens des tatsächlichen Umformungsbereichs in das dabei entstehende zusätzliche Volumen des Umformungsbereichs hineinfließen. Ist das tatsächliche Glasvolumen im Bereich der Halsöffnung jedoch beispielsweise aufgrund einer geringeren Wandstärke in diesem Bereich kleiner, so kann dies durch "Stauchen" des Volumens des tatsächlichen Umformungsbereichs kompensiert werden, sodass das wärmeweiche Glas im gesamten Volumen des Umformungsbereichs an den Formelementen anliegt und umgeformt wird, ohne dass dabei Hohlräume oder dergleichen entstehen, die zu unkontrollierten Schwankungen der geometrischen Abmessungen im Halsbereich des fertigen Glasbehältnisses führen würden. Hierzu kann insbesondere der Verstellweg der Anschlagplatte 41 in z-Richtung geeignet gesteuert werden.

Aufgrund des festen Abstands zwischen den Formrollen 50 und dem mittig angeordneten Formdorn 40 bleiben wichtige geometrische Abmessungen im Bereich der Halsöffnung, wie beispielsweise Innen- und Außendurchmesser des Rollrands 9, des Halses 8 und der Schulter 7 des fertigen Glasbehälters unabhängig von den tatsächlichen Abmessungen des Ausgangs-Glasrohrs im umzuformenden Bereich stets konstant. Schwankungen der tatsächlichen Abmessungen des Ausgangs-Glasrohrs werden bei Ausführungsformen, bei denen die Heissumformung in mehreren Bearbeitungsstationen erfolgt, jedoch die Formwerkzeuge der Bearbeitungsstationen nicht alle in der gleichen Weise in der axialen Richtung verstellt werden, ggf. durch Schwankungen in den Abmessungen des fertigen Glasbehälters in der z-Richtung kompensiert, beispielsweise durch höhere Toleranzen der Position des Rollrands 9, des Halses 8 und der Schulter 7 des fertigen Glasbehälters in der z-Richtung (Längsrichtung). Diese Abweichungen in der z-Richtung haben jedoch in praktischen Anwendungen meistens keinen Einfluss auf so wichtige Eigenschaften des fertigen Glasbehälters, wie beispielsweise tatsächliches Füllvolumen eines pharmazeutischen Wirkstoffs, Haltekraft eines Verschlusselements zum Verschließen der Halsöffnung oder Haltekraft einer Kappe, eines Kupplungsstücks oder dergleichen im Bereich der Halsöffnung, beispielsweise einer aufgebördelten Metallkappe oder eines Kupplungsstücks zur Ankopplung eines Spritzenkörpers an den fertigen Glasbehälter. Für den Fall, dass die Heissumformung an mehreren Bearbeitungsstationen erfolgt und die Formwerkzeuge an sämtlichen Bearbeitungsstationen in der gleichen Weise in der axialen Richtung in Entsprechung zu den bereitgestellten Abmessungsdaten verstellt werden, treten jedoch solche Schwankungen in den Abmessungen des fertigen Glasbehälters in der z-Richtung ebenfalls nicht auf.

Die vorgenannte Verstellung kann als Steuerung oder Regelung auf die bereitgestellten oder ermittelten Abmessungsdaten des Ausgangs-Glasrohrs aufgefasst werden.

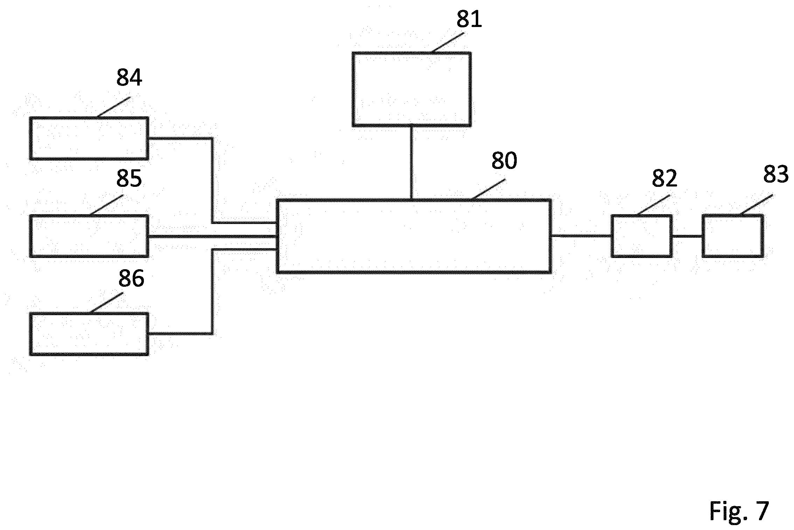

Die Fig. 7 fasst die zum Ausführen einer solchen Steuerung oder Regelung notwendigen Elemente einer Steuerungs- oder Regelungseinrichtung 80 schematisch zusammen. Der Steuerungs- oder Regelungseinrichtung 80 ist eine Nachschlagetabelle 81 zugeordnet, in der Soll- und Referenzwerte gespeichert sind. Die Steuerungs- oder Regelungseinrichtung 80 ist mit einem inline arbeitenden nicht-taktilen Inspektionssystem 84 zum Ermitteln der Abmessungsdaten des Ausgangs-Glasrohrs und/oder mit einer Datenbank bzw. Datenspeicher 85, in dem die Abmessungsdaten des Ausgangs-Glasrohrs gespeichert sind, und/oder mit einem nachgeordneten nicht-taktilen Inspektionssystem 86 zum Ermitteln der Abmessungsdaten im Halsbereich eines fertigen Glasbehälters nach der Heissumformung verbunden. Nach Berechnung der Verstellgrößen durch die Steuerungs- oder Regelungseinrichtung 80 werden diese an ein jeweiliges Stellglied 82 ausgegeben, der eine Verstellung des zugeordneten Formwerkzeugs 83 in der z-Richtung in Entsprechung zu der jeweiligen Verstellgröße bewirkt. Die jeweilige Verstellung des zugeordneten Formwerkzeugs 83 in der z-Richtung ist dabei typischerweise maximal 0,1 mm oder maximal 0,15.

Bei einer Heissformgebungsvorrichtung, die als eine in der Fig. 5a gezeigte Rundläufer-Maschine ausgebildet ist, werden für jedes an dem Drehtisch 12 gehaltene Ausgangs-Glasrohr die vorgenannten Abmessungsdaten bereitgestellt bzw. ermittelt und daraus entsprechende Verstellgrößen für das jeweilige Ausgangs-Glasrohr berechnet. Diese werden dann zum geeigneten Zeitpunkt an der jeweiligen Bearbeitungsstation an die jeweiligen Stellglieder angelegt, um die Formwerkzeuge geeignet in der z-Richtung zu verstellen. Dies bedeutet einen höheren Rechenaufwand für die Steuerungs- oder Regelungseinrichtung.

Dabei ist eine Zeitdauer zur Verstellung der Position der Formrollen 50 in der axialen Richtung (z) vor Beginn der Heissumformung des Halses kürzer ist als eine Zeitdauer, die benötigt wird, um das Glasrohr durch Drehbewegung des Drehtisches von einer ersten Bearbeitungsstation zu der nächsten, in Drehrichtung betrachtet stromabwärts angeordneten zweiten Bearbeitungsstation zu verstellen.

Wie dem Fachmann ohne weiteres ersichtlich sein wird, kann die vorstehend beschriebene Verstellung der Formwerkzeuge in z-Richtung individuell in den unterschiedlichen Phasen des Anformens von Hälsen an Glasrohren durchgeführt werden, insbesondere zur Formung des Schulterabschnitts (vgl. Fig. 6a), zur Formung des Rollrands (vgl. Fig. 6b) und/oder zur Formung des Mündungsbereichs (vgl. Fig. 6b). Wenngleich in der Fig. 5a gezeigt ist, dass die Ausgangs-Glasrohre während der Heissumformung vertikal ausgerichtet sind, was im Sinne der vorliegenden Erfindung eine Verstellung der Formwerkzeuge in z-Richtung erfordert, so kann die vorstehend beschriebene Verstellung der Formwerkzeuge in entsprechender Weise auch für Heissformgebungsvorrichtung mit einer anderen Ausrichtung der Ausgangs-Glasrohre während der Heissumformung. Wenn die Ausgangs-Glasrohre während der Heissumformung beispielsweise horizontal ausgerichtet sein sollten, so würde die vorstehend beschriebene Verstellung der Formwerkzeuge zur Kompensation von Dimensionsschwankungen des Ausgangs-Glasrohrs in entsprechender Weise exakt in der horizontalen Richtung erfolgen, also exakt parallel zur Ausrichtung der Ausgangs-Glasrohre.

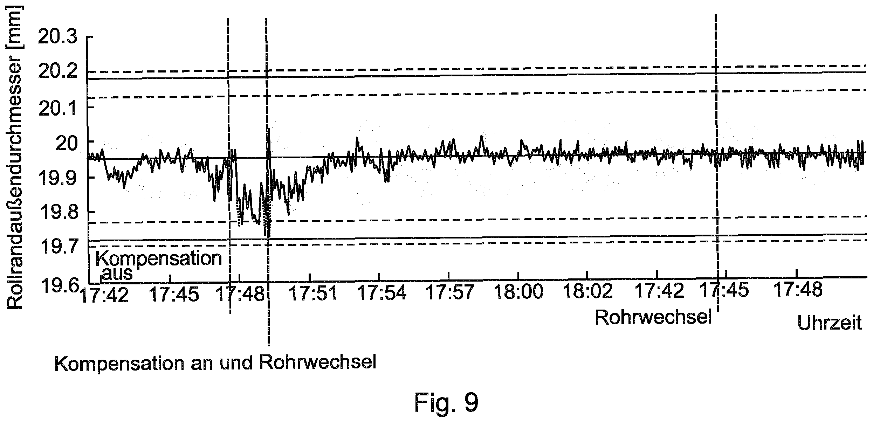

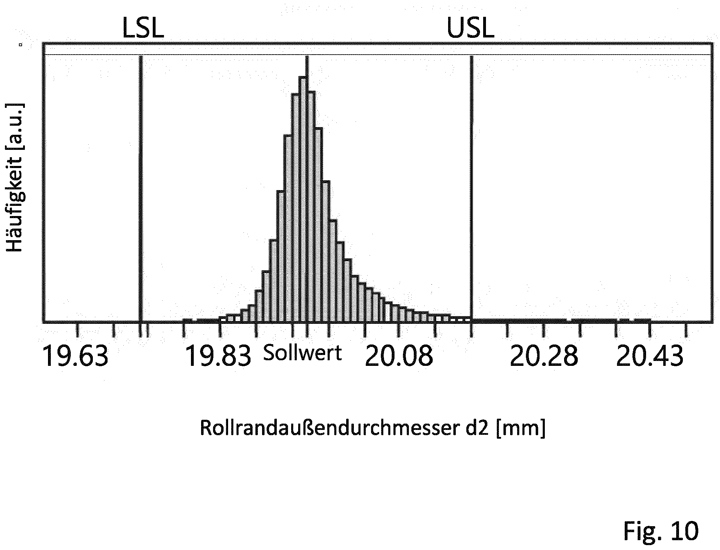

Solchermaßen hergestellte Glasbehältnisse können mittels statistischer Methoden eindeutig charakterisiert werden und unterscheiden sich insoweit deutlich von mit herkömmlichen Formgebungsverfahren hergestellten Glasbehältnissen, wie nachfolgend anhand der Figuren 9 und 10 beschrieben.

Fig. 9 zeigt den Rollrandaußendurchmesser d2 (vgl. Fig. 11a) eines Glasvials, das mit einem Verfahren gemäß der vorliegenden Erfindung mit Kompensation von Dimensionsschwankungen des Ausgangs-Glasrohrs hergestellt wurde, wobei der Rollrandaußendurchmesser d2 gegen die fortlaufende Produktionszeit aufgetragen ist. Deutlich erkennbar ist, dass der Rollrandaußendurchmesser d2 für praktisch alle Glasvials in einem engeren Band als in der Fig. 4 liegt. Auch nach einem Rohrwechsel, insbesondere auf Glasrohre einer neuen Charge, können bereits für die ersten Glasvials der neuen Charge geeignete Verstellgrößen berechnet werden. Glasbehältnisse können so mit deutlich kleineren Toleranzen hergestellt werden.

Die höhere Dimensionsgenauigkeit in radialer Richtung kann bei Glasbehältnissen, die gemäß der vorliegenden Erfindung hergestellt werden, auch mit statistischen Methoden eindeutig nachgewiesen werden. Diese können eindeutig von herkömmlich hergestellten Glasbehältnissen unterschieden werden. So zeigt die Fig. 10 ein Histogramm für die Verteilung der Dimensionsabweichungen, nämlich des Rollrandaußendurchmessers, im Bereich der Halsöffnung bei Glasvials, die mit einem Verfahren gemäß der vorliegenden Erfindung hergestellt wurden. Die fertigen Glasbehältnisse wurden unter den gleichen Bedingungen wie zur Erstellung des Histogramms der Fig. 4 vermessen. Wie man der Fig. 10 entnehmen kann, ist die Varianz des Rollrandaußendurchmessers im Bereich der Halsöffnung deutlich geringer und insbesondere kleiner als etwa 0,01% des Rollrandaußendurchmessers, bevorzugter kleiner als etwa 0,0075% des Rollrandaußendurchmessers und noch bevorzugter kleiner als etwa 0,005% des Rollrandaußendurchmessers. Wie man der Fig. 9 entnehmen kann, stellt sich eine erhebliche Verbesserung der Dimensionsgenauigkeit in Richtungen quer zur Längsrichtung der Glasbehältnisse bereits unmittelbar nach einem Glasrohrwechsel ein, also bereits für die erste Runde eines Rundläufermaschine nach einem Glasrohrwechsel. Versuchsreihen der Erfinder ergaben beispielsweise für einen Dauerbetrieb einer Rundläufermaschine eine stabile Varianz des Rollrandaußendurchmessers von nur 0,0045%; für einen Soll-Rollrandaußendurchmesser von 19,95 mm betrug das 95%-Vertrauensintervall etwa nur 0,117 mm (im Vergleich zu 0,249 mm für bei einer herkömmlichen Rundläufermaschine).

Die Varianz des Rollrandaußendurchmessers dient dabei nur als ein Beispiel für vergleichbare Abmessungen im Bereich der Halsöffnung quer zur Längsrichtung (z-Richtung) im Bereich der Halsöffnung von Glasbehältnisses, also für Abmessungen in radialer Richtung, insbesondere für eine oder mehrere der folgenden Abmessungen bei Vials oder Karpulen: Glaswandstärke im Bereich der Schulter, Glaswandstärke im Bereich des Halses, Glaswandstärke im Bereich des Rollrands, Glaswandstärke im Bereich der Mündungsöffnung, Außendurchmesser im Bereich der Schulter, Außendurchmesser im Bereich des Halses, Außendurchmesser im Bereich des Rollrands, Außendurchmesser im Bereich im Bereich der Mündungsöffnung; oder für eine oder mehrere der folgenden Abmessungen bei Glasspritzen: Glaswandstärke im Bereich des Spritzenkonus, Außendurchmesser im Bereich des Spritzenkonus, Außendurchmesser einer radialen Verjüngung im Bereich des Spritzenkonus.

Glasbehältnisse, die gemäß der vorliegenden Erfindung hergestellt sind, sind also durch eine signifikant kleinere Varianz der geometrischen Abmessungen der Glasbehältnisse in einer Richtung senkrecht zur Längsrichtung der Glasbehältnisse gekennzeichnet, was sich durch Vermessung einer geeignet großen statistischen Losgröße von Glasbehältnissen und statistische Auswertung eindeutig nachweisen lässt. Hierzu greift man eine geeignete Anzahl von Glasbehältnissen, beispielsweise zumindest 1000 Glasbehältnisse, in beliebiger Reihenfolge willkürlich, also ohne vorherige Vermessung, aus einer laufenden Produktion nach der Heissumformung heraus. Diese Losgröße sollte groß genug sein, um in ausreichendem Maße statistische Aussagen zu den Abmessungen der Glasbehältnisse im Bereich der Halsöffnung treffen zu können. Hierzu dürfte die Losgröße minimal vierzig Glasbehältnisse umfassen. Für die so herausgegriffenen Glasbehältnisse bestimmt man die Dimensionsgenauigkeiten in radialer Richtung im Bereich der Halsöffnung und ermittelt die Varianzen der jeweiligen geometrischen Abmessungen, wie vorstehend aufgelistet.

Rückschlüsse auf eine Steuerung oder Regelung in z-Richtung im Sinne der vorliegenden Erfindung kann man bereits eindeutig anhand der Messdaten der geometrischen Abmessungen in radialer Richtung ziehen, deren Varianz signifikant kleiner ist.

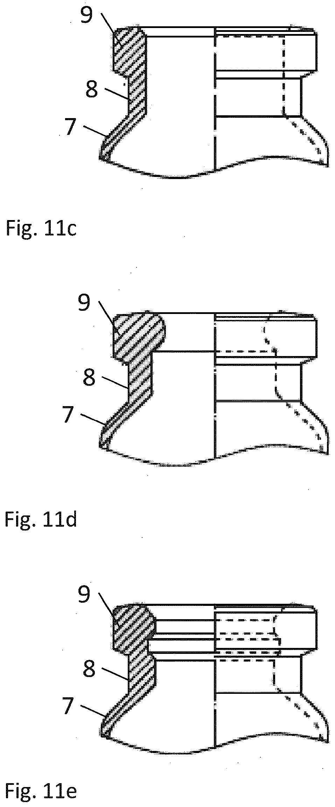

Die Figuren 11a und 11b zeigen die vorgenannten geometrischen Abmessungen im Bereich der Halsöffnung von Glasvials, die erfindungsgemäß präziser erzeugt werden können. Die Figuren 11c bis 11e zeigen die geometrischen Verhältnisse für die Halsbereiche der drei marktgängigen Typen von Glasvials, nämlich vom Typ "No Blowback" (Fig. 11c) vom Typ "European Blowback" (Fig. 11d) und vom Typ "American Blowback" (Fig. 11e).

Gemäß weiteren Ausführungsformen der Erfindung können gemeinsam mit den Formwerkzeugen auch Heizeinrichtungen, beispielsweise die in der Fig. 5a gezeigten Gasbrenner, in Entsprechung zu den Abmessungsdaten für das jeweilige Glasrohr in dessen axialer Richtung motorisch verstellt werden. Hierzu können beispielsweise die Gasbrenner ebenfalls mit der in der Fig. 5c dargestellten z-Verstelleinrichtung 71 verbunden sein, oder diesen kann eine eigene z-Verstelleinrichtung zugeordnet sein, die in gleicher Weise, wie vorstehend beschrieben, in der axialen Richtung des Glasrohrs verstellt wird.

Wenngleich die Erfindung vorstehend überwiegend anhand des Anformens von Hälsen an Glasfläschchen oder Karpulen beschrieben worden ist, kann das Verfahren in gleicher Weise auch zur Formung des Spritzenkonus eines Spritzenkörpers eingesetzt werden, also insbesondere kegelförmigen Endabschnitts mit einer Ausstoßöffnung und einer daran ausgebildeten radialen Verjüngung, beispielsweise zur Ankopplung eines Luer-Locks. Im Falle der Heissumformung von Spritzenkörpern kann der vorgenannte Formdorn als zylindrischer Zapfen bzw. Pin zum Formen der Innenkontur der Ausstoßöffnung ausgebildet sein. Wie dem Fachmann ohne weiteres ersichtlich sein wird, kann das vorgenannte Verfahren in entsprechender Weise auch für andere Typen von Glasbehältnissen angewendet werden, die durch Heissumformung aus Glasrohren hergestellt werden, insbesondere allgemein zur Herstellung von Glas-Verpackungsmitteln, auch mit größeren Abmessungen als zur Aufbewahrung von pharmazeutischen Wirkstoffen üblich.

### Bezugszeichenliste

- 1: Heissformgebungsvorrichtung

- 5: Vial
- 6: zylindrische Seitenwand
- 7: Schulter
- 8: Hals
- 9: Rollrand

- 10: Muttermaschine

- 11: Säule mit Antrieb
- 12: Drehtisch

- 14: Glasrohr oder halbfertiges Zwischenprodukt
- 15: Zuführabschnitt
- 16: Übergabeabschnitt
- 17: Gasbrenner
- 18: Brennerflamme

- 20: erster Heissumformungsabschnitt
- 21: zweiter Heissumformungsabschnitt
- 22: dritter Heissumformungsabschnitt

- 30: nicht-taktiles Inspektionssystem, z.B. Videokamera

- 40: Formdorn / zentrales Öffnungs-Formungswerkzeug
- 41: Basisplatte
- 42: z-Verstelleinrichtung für Formdorn 40

- 50: Formrolle
- 51: ebener Abschnitt von Formrolle 50
- 51': ebener Abschnitt von Formrolle 50
- 52: konkaver Abschnitt von Formrolle 50
- 53: Schräge von Formrolle 50
- 55: Drehlagerung von Formrolle 50
- 56: z-Verstelleinrichtung für Formrolle 50
- 57: radiale Verstelleinrichtung für Formrolle 50
- 58: Feder

- 60: Haltefutter
- 61: Klemmbacken
- 62: Spannhebel
- 63: Drehachse von Haltefutter 60

- 70: x/y-Verstelleinrichtung
- 71: z-Verstelleinrichtung
- 72: Arbeitstisch
- 73: x-Verstelleinrichtung
- 74: y-Verstelleinrichtung

- 80: Steuerungs- oder Regelungseinrichtung
- 81: Nachschlagetabelle
- 82: Stellglied
- 83: Formwerkzeug
- 84: inline nicht-taktiles Inspektionssystem, z.B. Videokamera
- 85: Datenbank
- 86: offline nicht-taktiles Inspektionssystem, z.B. Videokamera

- M: Schrittmotor / Motor

### Zum Stand der Technik

- 100: Vial
- 101: zylindrische Seitenwand
- 102: Schulter
- 103: Hals
- 104: Rollrand

- 110: Spalt

- 140: Formdorn
- 141: Basisplatte
- 150: Formrolle
- 151: ebene Abschnitt von Formrolle 150
- 152: konkaver Abschnitt von Formrolle 150

- 155: oberes Ende von Anlagebereich

## Patentansprüche

1. Verfahren zum Formen von Endabschnitten mit einer Öffnung an Glasbehältnissen (5), die durch Heißumformung aus einem Glasrohr (14) hergestellt werden, insbesondere an Glasbehältnissen zur Aufbewahrung von pharmazeutischen Wirkstoffen, bei welchem Verfahren
an zumindest einem Ende der Glasbehältnisse durch Heißumformung und Zusammenwirken eines zentral angeordneten Öffnungs-Formungswerkzeugs (40) mit zumindest einem Formwerkzeug (50) ein Endabschnitt (8) mit einer Öffnung ausgebildet wird,
**dadurch gekennzeichnet, dass** für das jeweilige Glasrohr (14) Abmessungsdaten bereitgestellt werden und
dass die Position des zumindest einen Formwerkzeugs (50) in axialer Richtung (z) der Glasbehältnisse in Entsprechung zu den Abmessungsdaten für das jeweilige Glasrohr (14) motorisch verstellt wird, um Schwankungen des Glasvolumens des zu bearbeitenden Glasrohrs (14) im Bereich der Heißformung zu kompensieren.

2. Verfahren nach Anspruch 1, wobei die motorische Verstellung der Position des zumindest einen Formwerkzeugs (50) in der axialen Richtung (z) vor Beginn der Heissumformung (8) ausgeführt wird und die Position des zumindest einen Formwerkzeugs (50) in der axialen Richtung (z) während der Heißumformung des Endabschnitts (8) konstant gehalten wird,
und/oder wobei mehrere Formwerkzeuge (50) mit dem zentral angeordneten Öffnungs-Formungswerkzeug (40) während der Heissumformung zusammenwirken und alle Formwerkzeuge gemeinsam in Entsprechung zu den Abmessungsdaten für das jeweilige Glasrohr (14) in der axialen Richtung (z) motorisch verstellt werden, vorzugsweise wobei die Formwerkzeuge (50) zusammen mit dem zentral angeordneten Öffnungs-Formungswerkzeug (40) auf einer z-Verstelleinrichtung (71) angeordnet sind, wobei die Position der z-Verstelleinrichtung (71) in axialer Richtung (z) der Glasbehältnisse in Entsprechung zu den Abmessungsdaten für das jeweilige Glasrohr (14) motorisch verstellt wird,
und/oder wobei weiterhin Heizeinrichtungen, insbesondere Gasbrenner (17), zum Erwärmen der Endabschnitte im Bereich der Heißumformung gemeinsam mit allen Formwerkzeugen in Entsprechung zu den Abmessungsdaten für das jeweilige Glasrohr (14) in der axialen Richtung (z) motorisch verstellt werden.

3. Verfahren nach einem der vorhergehenden Ansprüche, wobei die Abmessungsdaten eine Wandstärke des jeweiligen Glasrohrs (14) im Bereich der Heissumformung beinhalten und vorzugsweise weiterhin den Außen- und/oder Innendurchmesser des jeweiligen Glasrohrs (14) im Bereich der Heissumformung beinhalten, und/oder wobei die Abmessungsdaten für das jeweilige Glasrohr (14) oder für ein Glasbehältnis (5), das in einer vorherigen Heissumformung hergestellt wurde, nicht-taktil ermittelt werden,
insbesondere wobei die Abmessungsdaten für das jeweilige Glasrohr (14) durch Einlesen von einer Datenbank oder von einem Datenblatt mit rohr-spezifischen Daten für das jeweilige Glasrohr (14) bereitgestellt werden.

4. Verfahren nach einem der vorhergehenden Ansprüche, wobei die Abmessungsdaten von einer Steuerungs- oder Regelungseinrichtung (80) weiterverarbeitet werden, die anhand der ermittelten Abmessungsdaten eine Steuerungs- oder Regelgröße an ein Stellglied (82) ausgibt, das einer Verstelleinrichtung (42, 56) zugeordnet ist, wobei das Stellglied (82) das zumindest eine Formwerkzeug (50) in Entsprechung zu der Steuerungs- oder Regelgröße in der axialen Richtung (z) verstellt, vorzugsweise wobei die Steuerungs- oder Regelgröße durch Vergleich der bereitgestellten Abmessungsdaten mit Sollwerten bestimmt wird,
und/oder wobei die Position des zumindest einen Formwerkzeugs (50) in einer Ebene (x, y) senkrecht zu der axialen Richtung (z) während der Heißumformung des Halses (8) konstant gehalten wird.

5. Verfahren nach einem der vorhergehenden Ansprüche, wobei
der Endabschnitt mit der Öffnung als Hals mit einer Halsöffnung eines Vials oder einer Karpule angeformt wird, wobei
der Hals (8) mit der Halsöffnung an dem zumindest einen Ende der Glasbehältnisse durch Heißumformung mit Hilfe des zumindest einen Formwerkzeugs (50) ausgebildet wird, indem in die Halsöffnung das Öffnungs-Formungswerkzeug (40) eingeführt wird und von außen gegen die Halsöffnung Formwerkzeuge (50), insbesondere drehbewegliche Formrollen, zur Formgebung einer Außenkontur der Halsöffnung wirken und/oder indem gegen das jeweilige Ende des Glasrohrs (14) eine als Formwerkzeug wirkende Platte (41) zur Formgebung eines Mündungsrandes wirkt, wobei
zum motorischen Verstellen der Position des zumindest einen Formwerkzeugs in axialer Richtung (z) der Glasbehältnisse in Entsprechung zu den Abmessungsdaten für das jeweilige Glasrohr (14) die Platte (41) zur Formgebung des Mündungsrandes, eine Formrolle (50) zur Formgebung des Mündungsrandes und/oder eine Formrolle (50) zur Formung einer Schulter (7) des Glasbehältnisses (5) in der axialen Richtung (z) motorisch verstellt wird.

6. Verfahren nach einem vorhergehenden Ansprüche, wobei
der Endabschnitt mit der Öffnung als Spritzenkonus einer Glasspritze mit einer Durchgangsöffnung angeformt wird, wobei
der Spritzenkonus (8) mit der Durchgangsöffnung durch Heißumformung mit Hilfe des zumindest einen Formwerkzeugs (50) ausgebildet wird, indem in die Durchgangsöffnung das Öffnungs-Formungswerkzeug (40) eingeführt wird und von außen gegen die Durchgangsöffnung Formwerkzeuge (50), insbesondere drehbewegliche Formrollen, zur Formgebung einer Außenkontur und einer radialen Verjüngung des Spritzenkonus wirken und/oder indem gegen das jeweilige Ende des Glasrohrs (14) eine als Formwerkzeug wirkende Platte (41) zur Formgebung eines Mündungsrandes der Durchgangsöffnung wirkt, wobei
zum motorischen Verstellen der Position des zumindest einen Formwerkzeugs in axialer Richtung (z) der Glasbehältnisse in Entsprechung zu den Abmessungsdaten für das jeweilige Glasrohr (14) die Platte (41) zur Formgebung des Mündungsrandes, eine Formrolle (50) zur Formgebung des Spritzenkonus und/oder eine Formrolle (50) zur Formung der radialen Verjüngung (7) des Glasbehältnisses (5) in der axialen Richtung (z) motorisch verstellt wird,
insbesondere wobei das zentral angeordnete Öffnungs-Formungswerkzeug (40) weiterhin unabhängig von dem zumindest einen Formwerkzeug (50) während der Heißumformung in der axialen Richtung (z) motorisch verstellt wird.

7. Verfahren nach einem der vorhergehenden Ansprüche, wobei die Heißumformung in einer Rundläufer-Maschine (1) ausgeführt wird, die einen drehbeweglich gelagerten Drehtisch (12) aufweist, an dem eine Mehrzahl von Haltefuttern (60) in einer Umfangsrichtung verteilt angeordnet sind, wobei
in den Haltefuttern (60) jeweils ein Glasrohr (14) gehalten ist und die
Glasrohre bei einer Drehbewegung des Drehtisches (12) schrittweise eine Reihe von Bearbeitungsstationen (20-22) durchlaufen, an denen die Heißumformung mit Hilfe von Gasbrennern (17) und/oder von Bearbeitungswerkzeugen erfolgt, wobei
zumindest eine der Bearbeitungsstationen (20-22) zumindest ein Formwerkzeug (50) aufweist,
die Abmessungsdaten für jedes der an dem Drehtisch (12) gehaltenen Glasrohre (14) bereitgestellt werden, und
die Position des zumindest einen Formwerkzeugs (50) für jedes der an dem Drehtisch (12) gehaltenen Glasrohre (14) nach einem der vorhergehenden Ansprüche in der axialen Richtung (z) in Entsprechung zu den Abmessungsdaten für das jeweilige Glasrohr (14) motorisch verstellt wird,
vorzugsweise wobei das jeweilige Formwerkzeug (50) für jedes der an dem Drehtisch (12) gehaltenen Glasrohre (14) individuell zur Heißumformung in der axialen Richtung (z) verstellt wird.

8. Verfahren nach Anspruch 7, wobei die Verstellung der Position des zumindest einen Formwerkzeugs (50) in der axialen Richtung (z) vor Beginn der Formung des Endabschnitts (8) ausgeführt wird und die Position des zumindest einen Formwerkzeugs (50) in der axialen Richtung (z) während der Heißumformung des Endabschnitts (8) konstant gehalten wird, wobei eine Zeitdauer zur motorischen Verstellung der Position des zumindest einen Formwerkzeugs (50) in der axialen Richtung (z) vor Beginn der Formung des Endabschnitts (8) kürzer ist als eine Zeitdauer, die benötigt wird, um das Glasrohr durch Drehbewegung des Drehtisches (12) von einer ersten Bearbeitungsstation (20-22) zu einer in Drehrichtung betrachtet nachgeordneten zweiten Bearbeitungsstation (20, 22) zu verstellen, und/oder bei dem die motorische Verstellung der Position des zumindest einen Formwerkzeugs (50) in der axialen Richtung (z) in Entsprechung zu den Abmessungsdaten für das jeweilige Glasrohr (14) so ausgeführt wird, dass eine Varianz von Abmessungen des Glasbehältnisses (5) nach der Heissumformung im Bereich des Endabschnitts mit der Öffnung, insbesondere eine Varianz von Wandstärken des Glasbehältnisses im Bereich einer Schulter (7), eines Halses (8) und/oder eines Rollrands (9) quer zur Längsrichtung des Glasbehältnisses, mit einer Varianz der Abmessungsdaten des zur Herstellung des Glasbehältnisses verwendeten Glasrohrs (14) in anderer Weise korreliert ist als die Varianz von unterschiedlichen Abmessungsdaten für das jeweilige Glasrohr quer zu dessen Längsrichtung.

9. Heißformgebungsvorrichtung zum Formen von Endabschnitten mit einer Öffnung an Glasbehältnissen (5) durch Heißumformung, insbesondere an Glasbehältnissen zur Aufbewahrung von pharmazeutischen Wirkstoffen, mit
einer Bearbeitungsstation (20-22), an der die Heißumformung mit Hilfe von Gasbrennern (17) und Bearbeitungswerkzeugen erfolgt, wobei
die Bearbeitungsstation (20-22) ein zentral angeordnetes Öffnungs-Formungswerkzeug (40) und zumindest ein Formwerkzeug (50) aufweist und ausgelegt ist, um durch Zusammenwirken des zentral angeordneten Öffnungs-Formungswerkzeugs (40) mit dem zumindest einen Formwerkzeug (50) den Endabschnitt (8) mit der Öffnung auszubilden, und
eine Verstelleinrichtung (42, 56) für das zumindest eine Formwerkzeug (50) vorgesehen ist, um die Position des zumindest einen Formwerkzeugs (50) in axialer Richtung (z) der Glasbehältnisse relativ zu dem jeweiligen Glasrohr (14) zu verstellen;
**dadurch gekennzeichnet, dass**
der Verstelleinrichtung (42, 56) ein Stellglied (82) zugeordnet ist, wobei
eine Steuerungs- oder Regelungseinrichtung (80) mit einer Schnittstelle zur Eingabe von Abmessungsdaten, die für das jeweils zu verarbeitende Glasrohr (14) ermittelt wurden, angeordnet ist, wobei von der Steuerungs- und Regelungseinrichtung (80) basierend auf den eingegebenen Abmessungsdaten eine Steuerungs- oder Regelgröße an das Stellglied (82) ausgebbar ist, sodass anhand des Stellglieds (82) das zumindest eine Formwerkzeug (50) in Entsprechung zu der Steuerungs- oder Regelgröße in der axialen Richtung (z) verstellbar ist, um Schwankungen des Glasvolumens des zu bearbeitenden Glasrohrs (14) im Bereich der Heißformung zu kompensieren.

10. Heißformgebungsvorrichtung nach Anspruch 9, umfassend mehrere Bearbeitungsstationen (20-22), wobei die umzuformenden Glasrohre getaktet von Bearbeitungsstation zu Bearbeitungsstation gefördert werden, wobei die Verstelleinrichtung einen motorischen Antrieb (M) aufweist, der ausgelegt ist, um die Position des zumindest einen Formwerkzeugs (50) zu einer Soll-Position in axialer Richtung (z) der Glasbehältnisse schneller im Vergleich zu einer Zeitdauer zu verstellen, die benötigt wird, um die umzuformenden Glasrohre von Bearbeitungsstation zu Bearbeitungsstation in der Heissumformungsvorrichtung zu fördern,
und/oder wobei die Bearbeitungsstation (20-22) mehrere Formwerkzeuge (50) aufweist, die mit dem zentral angeordneten Öffnungs-Formungswerkzeug (40) während der Heissumformung zusammenwirken, und wobei die Steuerungs- oder Regelungseinrichtung (80) und die Verstelleinrichtung (42, 56) ausgelegt sind, sodass alle Formwerkzeuge gemeinsam in Entsprechung zu den Abmessungsdaten für das jeweilige Glasrohr (14) in der axialen Richtung (z) motorisch verstellt werden, vorzugsweise wobei die Formwerkzeuge (50) zusammen mit dem zentral angeordneten Öffnungs-Formungswerkzeug (40) auf einer z-Verstelleinrichtung (71) angeordnet sind, wobei die Position der z-Verstelleinrichtung (71) in axialer Richtung (z) der Glasbehältnisse in Entsprechung zu den Abmessungsdaten für das jeweilige Glasrohr (14) motorisch verstellbar ist,
insbesondere weiterhin umfassend Heizeinrichtungen, insbesondere Gasbrenner (17), zum Erwärmen der Endabschnitte im Bereich der Heißumformung, wobei den Heizeinrichtungen eine z-Verstelleinrichtung zugeordnet ist, um die Heizeinrichtungen gemeinsam mit allen Formwerkzeugen in Entsprechung zu den Abmessungsdaten für das jeweilige Glasrohr (14) in der axialen Richtung (z) motorisch zu verstellen.

11. Heißformgebungsvorrichtung nach 9 oder 10, weiterhin umfassend eine nichttaktile Erfassungseinrichtung (30, 84, 86), die ausgelegt ist, um die Abmessungsdaten für das jeweilige Glasrohr (14) oder für ein Glasbehältnis (5), das in einer vorherigen Heissumformung hergestellt wurde, nicht-taktil zu ermitteln, wobei die Schnittstelle mit der nicht-taktilen Erfassungseinrichtung (30, 84, 86) verbunden ist, und/oder wobei die Schnittstelle weiterhin ausgelegt ist, um die Abmessungsdaten für das jeweilige Glasrohr (14) von einer Datenbank oder von einem Datenblatt mit rohr-spezifischen Daten für das jeweilige Glasrohr (14) einzulesen, vorzugsweise wobei die Steuerungs- oder Regelungseinrichtung (80) ausgelegt ist, um die Steuerungs- oder Regelgröße durch Vergleich der ermittelten Abmessungsdaten mit einem Sollwert zu bestimmen.

12. Heißformgebungsvorrichtung nach einem der Ansprüche 9 bis 11, wobei
die Bearbeitungsstation als Formwerkzeug (50) drehbewegliche Formrollen zur Formgebung einer Außenkontur des Endabschnitts und/oder eine Platte (41) zur Formgebung eines Mündungsrandes der Öffnung aufweist, sodass an dem zumindest einen Ende der Glasbehältnisse ein Endabschnitt (8) mit der Öffnung ausbildbar ist, indem in die Öffnung das Öffnungs-Formungswerkzeug (40) eingeführt wird und von außen gegen die Öffnung die Formrollen (50) zur Formgebung einer Außenkontur des Endabschnitts und der Öffnung wirken und/oder indem gegen das jeweilige Ende des Glasrohrs (14) die Platte (41) zur Formgebung eines Mündungsrandes der Öffnung wirkt, wobei
die Steuerungs- oder Regelungseinrichtung (80) mit zumindest einer Verstelleinrichtung (42, 56, 71) verbunden ist, die ausgelegt ist, um zum motorischen Verstellen der Position des zumindest einen Formwerkzeugs in axialer Richtung (z) der Glasbehältnisse in Entsprechung zu den Abmessungsdaten für das jeweilige Glasrohr (14) die Platte (41) zur Formgebung des Mündungsrandes, die Formrolle (50) zur Formgebung des Endabschnitts und/oder die Formrolle (50) zur Formung einer Verjüngung (7) des Endabschnitts in der axialen Richtung (z) motorisch zu verstellen,
vorzugsweise wobei die Verstelleinrichtung (42, 56) für das zumindest eine Formwerkzeug (50) ausgelegt ist, um das zentral angeordnete Öffnungs-Formungswerkzeug (40) unabhängig von dem zumindest einen Formwerkzeug (50) in der axialen Richtung (z) zu verstellen,
und/oder wobei die Formwerkzeuge (50) zusammen mit dem zentral angeordneten Öffnungs-Formungswerkzeug (40) auf einer z-Verstelleinrichtung (71) angeordnet sind, wobei die z-Verstelleinrichtung (70) zum gemeinsamen Verstellen sämtlicher Formwerkzeuge (50) der jeweiligen Bearbeitungsstation in der axialen Richtung (z) der Glasbehältnisse in Entsprechung zu den Abmessungsdaten für das jeweilige Glasrohr (14) ausgelegt ist.

13. Heißformgebungsvorrichtung nach einem der Ansprüche 9 bis 12, die zur Heissumformung einer Mehrzahl von Glasrohren als Rundläufer-Maschine (1) mit einer Mehrzahl von Bearbeitungsstationen (20-22) ausgebildet ist, mit einem drehbeweglich gelagerten Drehtisch (12), an dem eine Mehrzahl von Haltefuttern (60) in einer Umfangsrichtung verteilt angeordnet sind, wobei
die Haltefutter (60) ausgelegt sind, um jeweils ein Glasrohr (14) zu halten, und
die Bearbeitungsstationen (20-22) um den Drehtisch (12) herum verteilt angeordnet sind, dass die Glasrohre bei einer Drehbewegung des Drehtisches (12) schrittweise an den Bearbeitungsstationen (20-22) vorbeigeführt werden, an denen die Heißumformung mit Hilfe von Gasbrennern (17) und/oder von Bearbeitungswerkzeugen erfolgt, wobei
zumindest eine der Bearbeitungsstationen (20-22) zumindest ein Formwerkzeug (50) und eine zugeordnete Verstelleinrichtung (42, 56) aufweist, die ausgelegt ist, um das zumindest eine Formwerkzeug (50) in Entsprechung zu Abmessungsdaten des jeweiligen Glasrohrs (14) in der axialen Richtung (z) zu verstellen,
die Schnittstelle zur Eingabe von Abmessungsdaten für jedes der an dem Drehtisch (12) gehaltenen Glasrohre (14) ausgelegt ist, und
die Steuerungs- oder Regelungseinrichtung (80) ausgelegt ist, sodass das Stellglied (82) der zumindest einen Bearbeitungsstation (20-22) das zumindest eine Formwerkzeug (50) in Entsprechung zu der Steuerungs- oder Regelgröße für jedes der an dem Drehtisch (12) gehaltenen Glasrohre (14) in der axialen Richtung (z) verstellt,
vorzugsweise wobei die Steuerungs- oder Regelungseinrichtung (80) und die zugeordnete Verstelleinrichtung (42, 56) ausgelegt sind, um die Verstellung der Position des zumindest einen Formwerkzeugs (50) in der axialen Richtung (z) vor Beginn der Formung des Endabschnitts (8) auszuführen und die Position des zumindest einen Formwerkzeugs (50) in der axialen Richtung (z) während der Formung des Endabschnitts (8) konstant zu halten, wobei eine Zeitdauer zur motorischen Verstellung der Position des zumindest einen Formwerkzeugs (50) in der axialen Richtung (z) vor Beginn der Formung des Endabschnitts (8) kleiner ist als eine Zeitdauer, die benötigt wird, um das Glasrohr durch Drehbewegung des Drehtisches (12) von einer ersten Bearbeitungsstation (20-22) zu einer in Drehrichtung betrachtet nachgeordneten zweiten Bearbeitungsstation (20, 22) zu verstellen.

14. Verwendung des Verfahrens nach einem der Ansprüche 1 bis 8 oder der Heißformgebungsvorrichtung nach einem der Ansprüche 9 bis 13 zur Herstellung von Glasbehältnissen (5), insbesondere von Glasbehältnissen zur Aufbewahrung von pharmazeutischen Wirkstoffen, insbesondere von Vials, Karpulen oder Spritzenkörpern.

## Claims

1. Method for forming end portions having an opening in glass containers (5) which are produced by means of hot-forming from a glass tube (14), in particular in glass containers for storing active pharmaceutical ingredients, in which method, by means of hot-forming and cooperation of a centrally arranged opening forming tool (40) having at least one forming tool (50), an end portion (8) having an opening is formed at least at one end of the glass containers, **characterised in that** dimension data are provided for the respective glass tube (14), and
**in that** the position of the at least one forming tool (50) is adjusted in a motorised manner in an axial direction (z) of the glass containers in accordance with the dimension data for the respective glass tube (14) in order to compensate for fluctuations of the glass volume of the glass tube (14) which is intended to be processed in the region of the hot-forming.

2. Method according to claim 1, wherein the motorised adjustment of the position of the at least one forming tool (50) in the axial direction (z) is carried out prior to the beginning of the hot-forming operation (8) and the position of the at least one forming tool (50) in the axial direction (z) is kept constant during the hot-forming of the end portion (8),
and/or wherein a plurality of forming tools (50) cooperate with the centrally arranged opening forming tool (40) during the hot-forming and all the forming tools are adjusted in a motorised manner in accordance with the dimension data for the respective glass tube (14) in the axial direction (z), preferably wherein the forming tools (50) are arranged together with the centrally arranged opening forming tool (40) on a z-adjustment device (71), wherein the position of the z-adjustment device (71) in an axial direction (z) of the glass containers is adjusted in a motorised manner in accordance with the dimension data for the respective glass tube (14), and/or wherein heating devices, in particular gas burners (17), in order to heat the end portions in the region of the hot-forming are further adjusted in a motorised manner together with all the forming tools in accordance with the dimension data for the respective glass tube (14) in the axial direction (z).

3. Method according to any one of the preceding claims, wherein the dimension data contain a wall thickness of the respective glass tube (14) in the region of the hot-forming and preferably further contain the outer and/or inner diameter of the respective glass tube (14) in the region of the hot-forming, and/or wherein the dimension data for the respective glass tube (14) or for a glass container (5) which was produced in a previous hot-forming operation is established in a non-tactile manner,
in particular wherein the dimension data for the respective glass tube (14) are provided by reading from a database or from a data sheet having tube-specific data for the respective glass tube (14).

4. Method according to any one of the preceding claims, wherein the dimension data are further processed by means of a control or regulation device (80) which outputs with reference to the established dimension data a control or regulation variable to an adjustment member (82) which is associated with an adjustment device (42, 56), wherein the adjustment member (82) adjusts the at least one forming tool (50) in the axial direction (z) in accordance with the control or regulation variable,
wherein the control or regulation variable is determined by comparing the provided dimension data with desired values, and/or wherein the position of the at least one forming tool (50) is kept constant in a plane (x, y) perpendicular to the axial direction (z) during the hot-forming of the neck (8).

5. Method according to any one of the preceding claims, wherein
the end portion with the opening is formed as a neck with a neck opening of a vial or a cartridge, wherein
the neck (8) is formed with the neck opening at the at least one end of the glass containers by means of hot-forming using the at least one forming tool (50) by the opening forming tool (40) being introduced into the neck opening and from the outer side against the neck opening forming tools (50), in particular rotationally movable forming rollers, acting in order to form an outer contour of the neck opening and/or by a plate (41) which acts as a forming tool acting against the respective end of the glass tube (14) in order to form an opening edge, wherein,
for motorised adjustment of the position of the at least one forming tool in an axial direction (z) of the glass containers in accordance with the dimension data for the respective glass tube (14), the plate (41) for forming the opening edge, a forming roller (50) for forming the opening edge and/or a forming roller (50) for forming a shoulder (7) of the glass container (5) is adjusted in a motorised manner in the axial direction (z).

6. Method according to any one of the preceding claims, wherein
the end portion with the opening is formed-on as a syringe cone of a glass syringe with a through-opening, wherein
the syringe cone (8) is formed with the through-opening by means of hot-forming using the at least one forming tool (50) by the opening forming tool (40) being introduced into the through-opening and, from the outer side, forming tools (50), in particular rotationally movable forming rollers, act against the through-opening in order to form an outer contour and a radial tapering of the syringe cone and/or by a plate (41) which acts as a forming tool acting against the respective end of the glass tube (14) in order to form an opening edge of the through-opening, wherein,
for motorised adjustment of the position of the at least one forming tool in an axial direction (z) of the glass containers in accordance with the dimension data for the respective glass tube (14), the plate (41) for forming the opening edge, a forming roller (50) for forming the syringe cone and/or a forming roller (50) for forming the radial tapering (7) of the glass container (5) is adjusted in a motorised manner in the axial direction (z),
in particular wherein the centrally arranged opening forming tool (40) is further adjusted in a motorised manner in the axial direction (z) independently of the at least one forming tool (50) during the hot-forming operation.

7. Method according to any one of the preceding claims, wherein the hot-forming is carried out in a rotary machine (1) which has a rotary table which is supported in a rotationally movable manner and on which a plurality of retention chucks (60) are arranged in a state distributed in a circumferential direction, wherein a glass tube (14) is retained in each case in the retention chucks (60) and the glass tubes during a rotational movement of the rotary table (12) gradually pass through a series of processing stations (20-22) on which the hot-forming operation is carried out using gas burners (17) and/or processing tools, wherein
at least one of the processing stations (20-22) has at least one forming tool (50),
the dimension data are provided for each of the glass tubes (14) which are retained on the rotary table (12), and
the position of the at least one forming tool (50) for each of the glass tubes (14) which are retained on the rotary table (12) is adjusted in a motorised manner in accordance with any one of the preceding claims in the axial direction (z) in accordance with the dimension data for the respective glass tube (14),
preferably wherein the respective forming tool (50) for each of the glass tubes (14) which are retained on the rotary table (12) is adjusted individually for hot-forming in the axial direction (z).

8. Method according to claim 7, wherein the adjustment of the position of the at least one forming tool (50) is carried out in the axial direction (z) prior to beginning the forming operation of the end portion (8) and the position of the at least one forming tool (50) in the axial direction (z) during the hot-forming of the end portion (8) is kept constant, wherein a duration for the motorised adjustment of the position of the at least one forming tool (50) in the axial direction (z) prior to the beginning of the forming of the end portion (8) is shorter than a duration which is required in order to adjust the glass tube during rotational movement of the rotary table (12) from a first processing station (20-22) to a second processing station (20, 22) which is downstream when viewed in the rotation direction, and/or in which the motorised adjustment of the position of the at least one forming tool (50) is carried out in the axial direction (z) in accordance with the dimension data for the respective glass tube (14) in such a manner that a variance of dimensions of the glass container (5) after the hot-forming in the region of the end portion with the opening, in particular a variance of wall thicknesses of the glass container in the region of a shoulder (7), a neck (8) and/or a rolled edge (9) transversely relative to the longitudinal direction of the glass container, is correlated with a variance of the dimension data of the glass tube (14) which is used to produce the glass container in a different manner from the variance of different dimension data for the respective glass tube transversely relative to the longitudinal direction thereof.

9. Hot-forming apparatus for forming end portions with an opening in glass containers (5) by means of hot-forming, in particular in glass containers for storing active pharmaceutical ingredients, having
a processing station (20-22) on which the hot-forming is carried out using gas burners (17) and processing tools, wherein
the processing station (20-22) has a centrally arranged opening forming tool (40) and at least one forming tool (50), and is configured, by means of cooperation of the centrally arranged opening forming tool (40) with the at least one forming tool (50), in order to form the end portion (8) with the opening, and
an adjustment device (42, 56) is provided for the at least one forming tool (50) in order to adjust the position of the at least one forming tool (50) in an axial direction (z) of the glass containers relative to the respective glass tube (14),
**characterised in that**
the adjustment device (42, 56) is associated with an adjustment member (82), wherein
a control or regulation device (80) having an interface for inputting dimension data which have been established for the glass tube (14) which is intended to be processed in each case is arranged, wherein from the control and regulation device (80) based on the input dimension data a control or regulation variable can be output to the adjustment member (82) so that, with reference to the adjustment member (82), the at least one forming tool (50) can be adjusted in accordance with the control or regulation variable in the axial direction (z) in order to compensate for fluctuations of the glass volume of the glass tube (14) which is intended to be processed in the region of the hot-forming.

10. Hot-forming apparatus according to claim 9, comprising a plurality of processing stations (20-22), wherein the glass tubes which are intended to be formed are conveyed in a timed manner from processing station to processing station, wherein the adjustment device has a motorised drive (M) which is configured to adjust the position of the at least one forming tool (50) with respect to a desired position in an axial direction (z) of the glass containers more rapidly in comparison with a duration which is required to convey the glass tubes which are intended to be formed from processing station to processing station in the hot-forming apparatus, and/or wherein the processing station (20-22) has a plurality of forming tools (50) which cooperate with the centrally arranged opening forming tool (40) during the hot-forming operation, and wherein the control or regulation device (80) and the adjustment device (42, 56) are configured so that all the forming tools are adjusted together in a motorised manner in accordance with the dimension data for the respective glass tube (14) in the axial direction (z), preferably wherein the forming tools (50) together with the centrally arranged opening forming tool (40) are arranged on a z-adjustment device (71), wherein the position of the z-adjustment device (71) can be adjusted in a motorised manner in an axial direction (z) of the glass containers in accordance with the dimension data for the respective glass tube (14),
in particular further comprising heating devices, in particular gas burners (17), for heating the end portions in the region of the hot-forming, wherein a z-adjustment device is associated with the heating devices in order to adjust the heating devices together with all the forming tools in accordance with the dimension data for the respective glass tube (14) in the axial direction (z).

11. Hot-forming apparatus according to claim 9 or 10, further comprising a non-tactile detection device (30, 84, 86) which is configured to establish in a non-tactile manner the dimension data for the respective glass tube (14) or for a glass container (5) which was produced in a previous hot-forming operation, wherein the interface is connected to the non-tactile detection device (30, 84, 86),
and/or wherein the interface is further configured to read the dimension data for the respective glass tube (14) from a database or from a data sheet with tube-specific data for the respective glass tube (14),
preferably wherein the control or regulation device (80) is configured to determine the control or regulation variable by comparing the established dimension data with a desired value.

12. Hot-forming apparatus according to any one of claims 9 to 11, wherein
the processing station has as a forming tool (50) rotationally movable forming rollers for forming an outer contour of the end portion and/or a plate (41) for forming an opening edge of the opening so that at the at least one end of the glass containers, an end portion (8) with the opening can be formed by the opening forming tool (40) being introduced into the opening and the forming rollers (50) acting from the outer side against the opening in order to form an outer contour of the end portion and the opening and/or by the plate (41) for forming an opening edge of the opening acting against the respective end of the glass tube (14), wherein
the control or regulation device (80) is connected to at least one adjustment device (42, 56, 71) which is configured in order, in order to adjust the position of the at least one forming tool in a motorised manner in an axial direction (z) of the glass containers in accordance with the dimension data for the respective glass tube (14), to adjust the plate (41) in order to form the opening edge, the forming roller (50) in order to form the end portion and/or the forming roller (50) in order to form a tapered portion (7) of the end portion in the axial direction (z) in a motorised manner,
preferably wherein the adjustment device (42, 56) is configured for the at least one forming tool (50) in order to adjust the centrally arranged opening forming tool (40) independently of the at least one forming tool (50) in the axial direction (z),
and/or wherein the forming tools (50) together with the centrally arranged opening forming tool (40) are arranged on a z-adjustment device (71), wherein the z-adjustment device (70) is configured for common adjustment of all the forming tools (50) of the respective processing station in the axial direction (z) of the glass containers in accordance with the dimension data for the respective glass tube (14).

13. Hot-forming apparatus according to any one of claims 9 to 12, which for hot-forming a plurality of glass tubes is in the form of a rotary machine (1) having a plurality of processing stations (20-22), having a rotary table (12) which is supported in a rotationally movable manner and on which a plurality of retention chucks (60) are arranged in a state distributed in a circumferential direction, wherein
the retention chucks (60) are configured to retain a glass tube (14) in each case, and
the processing stations (20-22) are arranged in a state distributed around the rotary table (12) in such a manner that the glass tubes during a rotational movement of the rotary table (12) are gradually guided past the processing stations (20-22) on which the hot-forming is carried out using gas burners (17) and/or processing tools, wherein
at least one of the processing stations (20-22) has at least one forming tool (50) and an associated adjustment device (42, 56) which is configured to adjust the at least one forming tool (50) in the axial direction (z) in accordance with dimension data of the respective glass tube (14),
the interface is configured for inputting dimension data for each of the glass tubes (14) which are retained on the rotary table (12), and
the control or regulation device (80) is configured so that the adjustment member (82) of the at least one processing station (20-22) adjusts the at least one forming tool (50) in accordance with the control or regulation variable for each of the glass tubes (14) which are retained on the rotary table (12) in the axial direction (z),
preferably wherein the control or regulation device (80) and the associated adjustment device (42, 56) are configured in order to carry out the adjustment of the position of the at least one forming tool (50) in the axial direction (z) before the beginning of the forming of the end portion (8) and to keep the position of the at least one forming tool (50) in the axial direction (z) constant during the forming of the end portion (8), wherein a duration for motorised adjustment of the position of the at least one forming tool (50) in the axial direction (z) prior to beginning the forming of the end portion (8) is smaller than a duration which is required in order to adjust the glass tube by means of rotational movement of the rotary table (12) from a first processing station (20-22) to a second processing station (20, 22) which is arranged downstream when viewed in the rotation direction.

14. Use of the method according to any one of claims 1 to 8 or the hot-forming apparatus according to any one of claims 9 to 13 for producing glass containers (5), in particular glass containers for storing active pharmaceutical ingredients, in particular vials, cartridges or syringe members.

## Revendications

1. Procédé de formage de portions d'extrémité avec une ouverture sur des récipients en verre (5), qui sont fabriqués par formage à chaud à partir d'un tube de verre (14), plus particulièrement sur des récipients en verre pour la conservation d'agents actifs pharmaceutiques, dans lequel
à au moins une extrémité des récipients en verre, est réalisée une portion d'extrémité (8) avec une ouverture par formage à chaud et grâce à l'interaction d'un outil de formage d'ouverture central (40) avec au moins un outil de formage (50),
**caractérisé en ce que**, pour le tube en verre (14) correspondant, des données de dimensions sont mises à disposition et
la position de l'au moins un outil de formage (50) dans la direction axiale (z) des récipients en verre est ajustée à l'aide d'un moteur selon les données de dimensions pour le tube de verre (14) correspondant, afin de compenser les variations du volume de verre du tube en verre (14) à traiter au niveau du formage à chaud.

2. Procédé selon la revendication 1, dans lequel l'ajustement motorisé de la position de l'au moins un outil de formage (50) dans la direction axiale (z) est effectué avant le début du formage à chaud (8) et la position de l'au moins un outil de formage (50) dans la direction axiale (z) est maintenue constante pendant le formage à chaud de la portion d'extrémité (8),
et/ou dans lequel plusieurs outils de formage (50) interagissent avec l'outil de formage d'ouverture central (40) pendant le formage à chaud et tous les outils de formage sont déplacés de manière motorisée conjointement dans la direction axiale (z) selon les données de dimensions pour le tube en verre (14) correspondant,
de préférence dans lequel les outils de formage (50) sont disposés, conjointement avec l'outil de formage d'ouverture central (40), sur un dispositif de déplacement z (71), dans lequel la position du dispositif de déplacement z (71) dans la direction axiale (z) des récipients en verre est ajustée de manière motorisée en fonction des données de dimensions pour le tube en verre (14) correspondant,
et/ou dans lequel, en outre, des dispositifs de chauffage, plus particulièrement des brûleurs à gaz (17), sont déplacés conjointement, de manière motorisée, avec tous les outils de formage en fonction des données de dimensions pour le tube en verre (14) correspondant, dans la direction axiale (z), pour le chauffage des portions d'extrémité au niveau du formage à chaud.

3. Procédé selon l'une des revendications précédentes, dans lequel les données de dimensions comprennent une épaisseur de paroi du tube en verre (14) correspondant au niveau du formage à chaud et, de préférence, en outre, les diamètre extérieur et/ou intérieur du tube en verre (14) correspondant au niveau du formage à chaud,
et/ou dans lequel les données de dimensions pour le tube en verre (14) correspondant ou pour un récipient en verre (5) qui a été fabriqué à l'aide d'un formage à chaud précédent, sont déterminées de manière non tactile,
plus particulièrement dans lequel les données de dimensions pour le tube en verre (14) correspondant sont mises à disposition par la lecture dans une base de données ou sur une fiche technique avec des données spécifiques aux tubes pour le tube en verre (14) correspondant.

4. Procédé selon l'une des revendications précédentes, dans lequel les données de dimensions sont traitées de manière supplémentaire par un dispositif de commande ou de régulation (80) qui envoie, à l'aide des données de dimensions déterminées, une grandeur de commande ou de régulation à un organe de réglage (82), qui correspond à un dispositif de déplacement (42, 56), dans lequel l'organe de réglage (82) déplace l'au moins un outil de formage (50) dans la direction axiale (z) en fonction de la grandeur de commande ou de régulation,
de préférence dans lequel la grandeur de commande ou de régulation est déterminée par comparaison des données de dimensions mise sà disposition avec des valeurs de consigne,
et/ou dans lequel la position de l'au moins un outil de formage (50) dans un plan (x, y) perpendiculaire à la direction axiale (z) est maintenue constante pendant le formage à chaud du col (8).

5. Procédé selon l'une des revendications précédentes, dans lequel
la portion d'extrémité avec l'ouverture est formée comme un col avec une ouverture de col d'un flacon ou d'une ampoule, dans lequel
le col (8) avec l'ouverture de col est réalisé au niveau d'au moins une extrémité des récipients en verre par formage à chaud à l'aide de l'au moins un outil de formage (50), en introduisant l'outil de formage d'ouverture (40) dans l'ouverture de col et grâce au fait que des outils de formage (50), plus particulièrement des galets de formage rotatifs, agissent de l'extérieur contre l'ouverture du col, afin de façonner un contour externe de l'ouverture de col et/ou grâce au fait que, contre l'extrémité respective du tube en verre (14), une plaque (41) agissant comme un outil de formage permet de façonner un bord d'embouchure, dans lequel
pour l'ajustement motorisé de la position de l'au moins un outil de formage dans la direction axiale (z) des récipients en verre en fonction des données de dimensions pour le tube en verre (14) correspondant, la plaque (41) est déplacée de manière motorisée pour le façonnage du bord d'embouchure et/ou un galet de formage (50) est déplacé de manière motorisée pour le formage d'un épaulement (7) du récipient en verre (5), dans la direction axiale (z).

6. Procédé selon l'une des revendications précédentes, dans lequel
la portion d'extrémité avec l'ouverture est formée comme un cône de seringue d'une seringue en verre avec une ouverture de passage, dans lequel
le cône de seringue (8) avec l'ouverture de passage est réalisé par formage à chaud à l'aide de l'au moins un outil de formage (50), en introduisant l'outil de formage d'ouverture (40) dans l'ouverture de passage et grâce au fait que des outils de formage (50), plus particulièrement des galets de formage rotatifs, agissent de l'extérieur contre l'ouverture de passage, afin de façonner un contour externe et un rétrécissement radial du cône de seringue et/ou grâce au fait que, contre l'extrémité respective du tube en verre (14), une plaque (41) agissant comme un outil de formage permet de façonner un bord d'embouchure de l'ouverture de passage, dans lequel
pour l'ajustement motorisé de la position de l'au moins un outil de formage dans la direction axiale (z) des récipients en verre en fonction des données de dimensions pour le tube en verre (14) correspondant, la plaque (41) est déplacée de manière motorisée pour le façonnage du bord d'embouchure, un galet de formage (50) est déplacé de manière motorisée pour le façonnage du cône de seringue et/ou un galet de formage (50) est déplacé de manière motorisée pour le formage du rétrécissement radial (7) du récipient en verre (5), dans la direction axiale (z),
plus particulièrement dans lequel l'outil de formage d'ouverture central (40) est en outre déplacé de manière motorisée, indépendamment de l'au moins un outil de formage (50), pendant le formage à chaud dans la direction axiale (z).

7. Procédé selon l'une des revendications précédentes, dans lequel le formage à chaud est effectué dans une machine rotative (1) qui comprend une table rotative (12) logée de manière rotative, sur laquelle sont répartis une pluralité de mandrins (60) dans la direction de la circonférence, dans lequel
dans chacun des mandrins (60) est maintenu un tube en verre (14) et les tubes en verre parcourent, lors d'un mouvement de rotation de la table rotative (12), pas-à-pas, une série de stations de traitement (20 - 22), au niveau desquelles le formage à chaud est effectué à l'aide de brûleurs à gaz (17) et/ou d'outils de traitement, dans lequel
au moins une des stations de traitement (20 - 22) comprend au moins un outil de formage (50),
les données de dimensions pour chacun des tubes en verre (14) maintenus sur la table rotative (12) sont mises à disposition et
la position de l'au moins un outil de formage (50) pour chacun des tubes en verre (14) maintenus sur la table rotative (12) est ajustée de manière motorisée selon l'une des revendications précédentes dans la direction axiale (z) en fonction des données de dimensions pour le tube en verre (14) correspondant,
de préférence dans lequel l'outil de formage (50) correspondant est déplacé individuellement dans la direction axiale (z) pour chacun des tubes en verre (14) maintenus sur la table rotative (12), pour le formage à chaud.

8. Procédé selon la revendication 7, dans lequel l'ajustement de la position de l'au moins un outil de formage (50) dans la direction axiale (z) est effectué avant le début du formage de la portion d'extrémité (8) et la position de l'au moins un outil de formage (50) dans la direction axiale (z) est maintenue constante pendant le formage à chaud de la portion d'extrémité (8), dans lequel une durée de l'ajustement motorisé de la position de l'au moins un outil de formage (50) dans la direction axiale (z) avant le début du formage de la portion d'extrémité (8) est plus courte qu'une durée nécessaire pour déplacer le tube en verre, par rotation de la table rotative (12), d'une première station de traitement (20 - 22) vers une deuxième station de traitement (20, 22) disposée en aval dans le sens de rotation,
et/ou dans lequel l'ajustement motorisé de la position de l'au moins un outil de formage (50) dans la direction axiale (z) est effectué en fonction des données de dimensions pour le tube en verre (14) correspondant, de sorte qu'une variation des dimensions du récipient en verre (5) après le formage à chaud au niveau de la portion d'extrémité avec l'ouverture, plus particulièrement une variation des épaisseurs de parois du récipient en verre au niveau d'un épaulement (7), d'un col (8) et/ou d'un bord roulé (9) transversal par rapport à la direction longitudinale du récipient en verre, est corrélée avec une variation des données de dimensions du tube en verre (14) utilisé pour la fabrication du récipient en verre d'une autre manière que la variation de données de dimensions différentes pour le tube en verre correspondant transversalement par rapport à sa direction longitudinale.

9. Dispositif de formage à chaud pour le formage de portions d'extrémité avec une ouverture sur des récipients en verre (5) par formage à chaud, plus particulièrement sur des récipients en verre pour la conservation d'agents actifs pharmaceutiques, avec
une station de traitement (20 - 22) au niveau de laquelle le formage à chaud est effectué à l'aide de brûleurs à gaz (17) et d'outils de traitement, dans lequel
la station de traitement (20 - 22) comprend un outil de formage d'ouverture central (40) et au moins un outil de formage (50) et est conçue pour réaliser la portion d'extrémité (8) avec l'ouverture grâce à l'interaction de l'outil de formage d'ouverture central (40) avec l'au moins un outil de formage (50) et
un dispositif de déplacement (42, 56) est prévu pour l'au moins un outil de formage (50), afin d'ajuster la position de l'au moins un outil de formage (50) dans la direction axiale (z) des récipients en verre par rapport au tube en verre (14) correspondant,
**caractérisé en ce que**
au dispositif de déplacement (42, 56) correspond un organe de réglage (82), dans lequel
un dispositif de commande ou de régulation (80) avec une interface pour l'entrée de données de dimensions, qui ont été déterminées pour le tube en verre (14) correspondant à traiter, est prévu, dans lequel le dispositif de commande et de régulation (80) envoie, sur la base des données de dimensions entrées, une grandeur de commande ou de régulation à l'organe de réglage (82), de sorte que, à l'aide de l'organe de réglage (82), l'au moins un outil de formage (50) peut être déplacé en fonction de la grandeur de commande ou de régulation dans la direction axiale (z), afin de compenser les variations du volume de verre du tube en verre (14) à traiter au niveau du formage à chaud.

10. Dispositif de formage à chaud selon la revendication 9, comprenant plusieurs stations de traitement (20 - 22), dans lequel les tubes en verre à former sont convoyés de manière cadencée d'une station de traitement à l'autre, dans lequel le dispositif de déplacement comprend un entraînement motorisé (M) qui est conçu pour déplacer la position de l'au moins un outil de formage (50) vers une position de consigne dans la direction axiale (z) des récipients en verre plus rapidement par rapport à une durée nécessaire pour convoyer les tubes en verre à former d'une station de traitement à l'autre dans le dispositif de formage à chaud,
et/ou dans lequel la station de traitement (20 - 22) comprend plusieurs outils de formage (50) qui interagissent avec l'outil de formage d'ouverture central (40) pendant le formage à chaud et dans lequel le dispositif de commande ou de régulation (80) et le dispositif de déplacement (42, 56) sont conçus de sorte que tous les outils de formage sont déplacés conjointement de manière motorisée en fonction des données de dimensions pour le tube en verre (14) correspondant dans la direction axiale (z), de préférence dans lequel les outils de formage (50) sont disposés, conjointement avec l'outil de formage d'ouverture central (40), sur un dispositif de déplacement z (71), dans lequel la position du dispositif de déplacement z (71) dans la direction axiale (z) des récipients en verre peut être ajustée de manière motorisée en fonction des données de dimensions pour le tube en verre (14) correspondant,
plus particulièrement comprenant en outre des dispositifs de chauffage, plus particulièrement des brûleurs à gaz (17), pour le chauffage des portions d'extrémité au niveau du formage à chaud, dans lequel, aux dispositifs de chauffage, correspond un dispositif de déplacement z afin de déplacer de manière motorisée les dispositifs de chauffage conjointement avec tous les outils de formage en fonction des données de dimensions pour le tube en verre (14) correspondant dans la direction axiale (z).

11. Dispositif de formage à chaud selon la revendication 9 ou 10, comprenant en outre un dispositif de mesure non tactile (30, 84, 86) qui est conçu pour déterminer de manière non tactile les données de dimensions pour le tube en verre (14) correspondant ou pour un récipient en verre (5) qui a été fabriqué lors d'un formage à chaud précédent, dans lequel l'interface est reliée avec le dispositif de mesure non tactile (30, 84, 86),
et/ou dans lequel l'interface est en outre conçue pour lire les données de dimensions pour le tube en verre (14) correspondant dans une base de données ou sur une fiche technique avec des données spécifiques aux tubes pour le tube en verre (14) correspondant,
de préférence dans lequel le dispositif de commande ou de régulation (80) est conçu pour déterminer la grandeur de commande ou de régulation par comparaison des données de dimensions avec une valeur de consigne.

12. Dispositif de formage à chaud selon l'une des revendications 9 à 11, dans lequel
la station de traitement comprend, comme outil de formage, des galets de formage (50) rotatifs pour le façonnage d'un contour externe de la portion d'extrémité et/ou une plaque (41) pour le façonnage d'un bord d'embouchure de l'ouverture, de sorte que, à l'au moins une extrémité des récipients en verre, une portion d'extrémité (8) avec l'ouverture peut être réalisée, en introduisant l'outil de formage d'ouverture (40) dans l'ouverture et grâce au fait que les galets de formage (50) agissent de l'extrémité contre l'ouverture pour le façonnage d'un contour externe de la portion d'extrémité et de l'ouverture et/ou grâce au fait que la plaque (41) agit contre l'extrémité respective du tube en verre (14) pour le façonnage d'un bord d'emblée de l'ouverture, dans lequel
le dispositif de commande ou de régulation (80) est relié avec au moins un dispositif de déplacement (42, 56, 71) qui est conçu pour ajuster de manière motorisée la position de l'au moins un outil de formage dans la direction axiale (z) des récipients en verre en fonction des données de dimensions pour le tube en verre (14) correspondant et pour déplacer de manière motorisée la plaque (41) pour le façonnage du bord d'embouchure, le galet de formage (50) pour le façonnage de la portion d'extrémité et/ou le galet de formage (50) pour le formage d'un rétrécissement (7) de la portion d'extrémité dans la direction axiale (z),
de préférence dans lequel le dispositif de déplacement (42, 56) pour l'au moins un outil de formage (50) est conçu pour déplacer l'outil de formage d'ouverture central (40) indépendamment de l'au moins un outil de formage (50) dans la direction axiale (z),
et/ou dans lequel les outils de formage (50) sont disposés, conjointement avec l'outil de formage d'ouverture central (40), sur un dispositif de déplacement z (71), dans lequel le dispositif de déplacement z (70) est conçu pour le déplacement conjoint de tous les outils de formage (50) de la station de traitement respective dans la direction axiale (z) des récipients en verre en fonction des données de dimensions pour le tube en verre (14) correspondant.

13. Dispositif de formage à chaud selon l'une des revendications 9 à 12, qui est conçu pour le formage à chaud d'une pluralité de tubes en verre, comme une machine rotative (1) avec une pluralité de stations de traitement (20 - 22), avec une table rotative (12) logée de manière rotative, sur laquelle sont répartis une pluralité de mandrins (60) dans la direction de la circonférence, dans lequel
chacun des mandrins (60) est conçu pour maintenir un tube en verre (14) et les stations de traitement (20 - 22) sont réparties autour de la table rotative (12), de sorte que les tubes en verre parcourent pas-à-pas, lors d'un mouvement de rotation de la table rotative (12), les stations de traitement (20 - 22) au niveau desquelles le formage à chaud est effectué à l'aide de brûleurs à gaz (17) et/ou d'outils de traitement, dans lequel
au moins une des stations de traitement (20 - 22) comprend au moins un outil de formage (50) et un dispositif de déplacement (42, 56) correspondant, qui est conçu pour déplacer l'au moins un outil de formage (50) en fonction des données de dimensions du tube en verre (14) correspondant dans la direction axiale (z),
l'interface est conçue pour l'entrée de données de dimensions pour chacun des tubes en verre (14) maintenus sur la table rotative (12) et
le dispositif de commande ou de régulation (80) est conçu de sorte que l'organe de réglage (82) d'au moins une station de traitement (20 - 22) déplace l'au moins un outil de formage (50) en fonction de la grandeur de commande ou de régulation pour chacun des tubes en verre (14) maintenus sur la table rotative (12), dans la direction axiale (z),
de préférence dans lequel le dispositif de commande ou de régulation (80) et le dispositif de déplacement (42, 56) correspondant sont conçus pour effectuer l'ajustement de la position de l'au moins un outil de formage (50) dans la direction axiale (z) avant le début du formage de la portion d'extrémité (8) et pour maintenir constante la position de l'au moins un outil de formage (50) dans la direction axiale (z) pendant le formage de la portion d'extrémité (8), dans lequel une durée de l'ajustement motorisé de la position de l'au moins un outil de formage (50) dans la direction axiale (z) avant le début du formage de la portion d'extrémité (8) est inférieure à une durée qui est nécessaire pour déplacer le tube en verre par un mouvement de rotation de la table rotative (12) d'une première station de traitement (20 - 22) vers une deuxième station de traitement (20, 22) disposée en aval dans le sens de rotation.

14. Utilisation du procédé selon l'une des revendications 1 à 8 ou du dispositif de formage à chaud selon l'une des revendications 9 à 13 pour la fabrication de récipients en verre (5), plus particulièrement de récipients en verre pour la conservation d'agents actifs pharmaceutiques, plus particulièrement de flacons, d'ampoules ou de cônes de seringues.
